(19) Europäisches Patentamt / European Patent Office / Office européen des brevets

(11) **EP 4 141 390 B1**

(12) **EUROPÄISCHE PATENTSCHRIFT**

(45) Veröffentlichungstag und Bekanntmachung des Hinweises auf die Patenterteilung:
**20.03.2024   Patentblatt 2024/12**

(21) Anmeldenummer: **21193945.9**

(22) Anmeldetag: **31.08.2021**

(51) Internationale Patentklassifikation (IPC):
*G01F 1/80* (2006.01)   *G01F 1/76* (2006.01)
*G01F 1/74* (2006.01)   *G01F 1/34* (2006.01)
*B05B 7/14* (2006.01)   *B05B 12/00* (2018.01)

(52) Gemeinsame Patentklassifikation (CPC):
**B05B 12/006; B05B 7/1472; G01F 1/34; G01F 1/74; G01F 1/76;** B05B 15/55

(54) **MESSVORRICHTUNG ZUM MESSEN EINES MIT DRUCKGAS ERZEUGBAREN BESCHICHTUNGSPULVER-MASSENSTROMS IN EINER PULVERLEITUNG UND FÖRDERVORRICHTUNG FÜR BESCHICHTUNGSPULVER**

MEASURING DEVICE FOR MEASURING A COATING POWDER MASS FLOW, WHICH CAN BE GENERATED WITH COMPRESSED GAS, IN A POWDER LINE AND CONVEYING DEVICE FOR COATING POWDER

DISPOSITIF DE MESURE PERMETTANT DE MESURER UN DÉBIT MASSIQUE DE POUDRE DE REVÊTEMENT POUVANT ÊTRE GÉNÉRÉ À L'AIDE DU GAZ COMPRIMÉ DANS UNE CONDUITE DE POUDRE ET DISPOSITIF DE TRANSPORT POUR LE POUDRE DE REVÊTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.03.2023   Patentblatt 2023/09**

(73) Patentinhaber: **Wagner International AG**
**9450 Altstätten (CH)**

(72) Erfinder:
 • **Seitz, Kurt**
  **9443 Widnau (CH)**

 • **Luzi, Kevin**
  **9452 Hinterforst (CH)**
 • **Topp, Michael**
  **88094 Oberteuringen (DE)**
 • **Schmid, Rene**
  **9452 Hinterforst (CH)**

(74) Vertreter: **Nückel, Thomas**
**Patentanwaltskanzlei Nückel**
**Eichweidstrasse 22**
**8820 Wädenswil (CH)**

(56) Entgegenhaltungen:
EP-A1- 0 693 973     EP-A1- 1 958 899
EP-A1- 3 685 924     US-B1- 6 176 647

## Beschreibung

## Technisches Gebiet

Die Erfindung betrifft eine Messvorrichtung zum Messen eines mit Druckgas erzeugbaren Beschichtungspulver-Massenstroms in einer Pulverleitung und eine Fördervorrichtung für Beschichtungspulver.

## Stand der Technik

Aus den Druckschriften DE 10 2017 103 316 A1, DE 10 2018 133 713 A1, WO 2009/037540 A2, DE 10 2005 006 522 B3, EP 2 77 821 A1, WO 2003/024612 A1, DE 102 47 829 A1, WO 2005/051549 A1, EP 3 238 832 A1, DE 103 00 280 A1, DE 103 53 968 A1, WO 2014/161718 A1, WO 2014/202342 A1 und der Betriebsanleitung, Ausgabe 11/2020, Wagner GmbH, 88677 Markdorf, Bestellnummer DOC2368103 sind Fördervorrichtungen zum Fördern von Beschichtungspulver bekannt. Diesen Fördervorrichtungen ist gemein, dass sie das Beschichtungspulver mittels Druckluft durch eine Pulverleitung transportieren. Dabei können im Laufe der Zeit Komponenten der Fördervorrichtung verschleissen, sodass sich die Parameter der Fördervorrichtung ändern und damit ändert sich auch der tatsächlich geförderte Beschichtungspulver-Massenstrom im Laufe der Zeit. Bisher ist keine Lösung bekannt, wie eine solche verschleissbedingte Änderung des Beschichtungspulver-Massenstroms detektiert werden kann.

US6176647 B1 offenbart einen Pulvermassendurchflussmesser der ein Messrohr mit einem Einlass und einem Auslass, eine Pulvereinführeinrichtung zum Einführen von Pulver in das Messrohr, eine Dispersionseinrichtung zum sukzessiven Abscheren des Endendes einer Pulversäule in dünne Schichten und einen Sensor zum Messen einer Druckdifferenz zwischen dem Einlass und dem Auslass des Messrohrs umfasst.

## Darstellung der Erfindung

Eine Aufgabe der Erfindung ist es, eine Messvorrichtung zum Messen eines mit Druckgas erzeugbaren Beschichtungspulver-Massenstroms in einer Pulverleitung anzugeben, mit der jederzeit der tatsächliche, augenblickliche Beschichtungspulver-Massenstrom ermittelt werden kann.

Die erfindungsgemässe Messvorrichtung hat den Vorteil, dass mit ihr eine eventuell im Lauf der Zeit auftretende Drift, welche zum Beispiel durch einen Komponentenverschleiss verursacht wird, ermittelt werden kann. Diese Information über die Drift kann zum Beispiel benutzt werden, um dem Bedienpersonal zu signalisieren, dass eine Drift stattgefunden hat. Die Information kann auch benutzt werden, um bei einem Pulverförderer die Förderparameter manuell oder automatisch anzupassen. Vorteilhafterweise kann damit die Beschichtungsqualität auf einem konstant hohen Niveau gehalten werden.

Mit der erfindungsgemässen Messvorrichtung kann der Verschleissgrad der Fördervorrichtung ermittelt werden, um geeignete Massnahmen ergreifen zu können, falls der Verschleiss ein bestimmtes Mass überschritten hat.

Die Aufgabe wird durch eine Messvorrichtung zum Messen eines mit Druckgas erzeugbaren Beschichtungspulver-Massenstroms in einer Pulverleitung mit den in Patentanspruch 1 angegebenen Merkmalen gelöst.

Die erfindungsgemässe Messvorrichtung zum Messen eines mit Druckgas erzeugbaren Beschichtungspulver-Massenstroms in einer Pulverleitung, umfasst eine Steuer- und Auswerteeinheit, die derart ausgebildet und betreibbar ist, dass sie zwischen einem Offset-Modus und einem Betriebsmodus wechseln kann. Die Steuer- und Auswerteeinheit sorgt im Offset-Modus dafür, dass eine Einstelleinrichtung die Pulverleitung mit Druckgas beaufschlagt und den Beschichtungspulverfluss in der Pulverleitung unterbindet, und dass sodann ein Drucksensor den Druck in der Pulverleitung erfasst. Die Steuer- und Auswerteeinheit interpretiert den erfassten Druck als Offset-Druckwert. Die Steuer- und Auswerteeinheit sorgt im Betriebsmodus dafür, dass die Einstelleinrichtung den Beschichtungspulverfluss in der Pulverleitung freigibt, und ermittelt sodann anhand des vom Drucksensor in der Pulverleitung erfassten Drucks, des Offset-Druckwerts und eines Korrekturwerts den durch die Pulverleitung strömenden Beschichtungspulver-Massenstrom.

Vorteilhafte Weiterbildungen der Erfindung ergeben sich aus den in den abhängigen Patentansprüchen angegebenen Merkmalen.

Bei einer Ausführungsform der erfindungsgemässen Messvorrichtung umfasst die Einstelleinrichtung eine Druckgasquelle.

Bei einer weiteren Ausführungsform der erfindungsgemässen Messvorrichtung umfasst die Einstelleinrichtung ein Absperrelement.

Bei einer zusätzlichen Ausführungsform der erfindungsgemässen Messvorrichtung ist die Steuer- und Auswerteeinheit derart ausgebildet und betreibbar, dass sie wiederholt in den Offset-Modus wechselt und den Offset-Druckwert erneut ermittelt.

Bei einer weiteren Ausführungsform der erfindungsgemässen Messvorrichtung ist die Steuer- und Auswerteeinheit derart ausgebildet und betreibbar, dass sie den Beschichtungspulver-Massenstrom erneut ermittelt.

Zudem kann bei der Messvorrichtung vorgesehen sein, dass die Steuer- und Auswerteeinheit derart ausgebildet und betreibbar ist, dass sie in einen Kalibriermodus wechseln kann. Im Kalibriermodus sorgt sie dafür, dass die Einstelleinrichtung den Beschichtungspulverfluss in der Pulverleitung für eine bestimmte Zeitdauer freigibt, sodann der Drucksensor währenddessen den Druck in der Pulverleitung erfasst, und die Steuer- und Auswerteeinheit den erfassten Druck als weiteren Druckwert interpretiert. Die Steuer- und Auswerteeinheit ermittelt anhand der während dieser Zeitdauer durch die Pulverleitung geströmten Beschichtungspulvermasse und der beiden Druckwerte den Korrekturwert.

Bei einer Weiterbildung der erfindungsgemässen Messvorrichtung ist die Steuer- und Auswerteeinheit derart ausgebildet und betreibbar, dass sie wiederholt in den Kalibriermodus wechselt und den Korrekturwert erneut ermittelt.

Bei einer anderen Weiterbildung der erfindungsgemässen Messvorrichtung ist die Steuer- und Auswerteeinheit derart ausgebildet und betreibbar, dass sie, wenn der erneut ermittelte Korrekturwert vom bisherigen Korrekturwert abweicht, ihn anpasst und/oder die Abweichung signalisiert.

Bei einer zusätzlichen Weiterbildung der erfindungsgemässen Messvorrichtung ist ein Pulversensor vorgesehen, um zu detektieren, ob Beschichtungspulver durch die Pulverleitung strömt.

Bei einer anderen Weiterbildung der erfindungsgemässen Messvorrichtung ist der Pulversensor in einem an die Pulverleitung angeschlossenen Sprühapplikator angeordnet. Dadurch kann eindeutig erkannt werden kann, ob tatsächlich Pulver versprüht wird. Wenn der Pulversensor nahe der Fördervorrichtung positioniert ist, wird die Erkennung, ob tatsächlich Pulver versprüht wird, zumindest erschwert. Gründe hierfür können beispielsweise sein, dass die Pulverleitung ein Leck hat oder von der Muffe abgerutscht ist. Dies würde dazu führen, dass ein Werkstück nur unzureichend beschichtet wird.

Der Pulversensor ist bei der erfindungsgemässen Messvorrichtung vorzugsweise als Influenzsensor oder als optischer Sensor ausgebildet.

Bei einer weiteren Weiterbildung der erfindungsgemässen Messvorrichtung ist die Steuer- und Auswerteeinheit derart ausgebildet und betreibbar, dass sie aus mehreren der vom Drucksensor erfassten Druckwerten einen geglätteten Druckwert berechnet. Unter einem geglätteten Druckwert wird beispielsweise ein zeitlich gemittelter Druckwert verstanden.

Die erfindungsgemässe Fördervorrichtung für Beschichtungspulver umfasst die oben angegebene Messvorrichtung und einen mit Druckgas betreibbaren Pulverförderer, der auslassseitig mit der Pulverleitung verbunden ist. Des weiteren ist vorgesehen, dass mit der Einstelleinrichtung der Beschichtungspulverfluss in der Pulverleitung unterbindbar ist.

Bei einer Weiterbildung der erfindungsgemässen Fördervorrichtung ist die Pulverleitung ausgangsseitig mit einem Sprühapplikator verbunden.

Bei einer anderen Weiterbildung der erfindungsgemässen Fördervorrichtung weist die Druckgasquelle ein Druckgas-Absperrelement auf.

Bei einer zusätzlichen Weiterbildung der erfindungsgemässen Fördervorrichtung weist die Druckgasquelle einen Volumenstromregler auf, der dazu vorgesehen ist, den Druckgas-Volumenstrom, der dem Pulverförderer zugeführt wird, auf einem vorgebbaren, konstanten Wert zu halten.

Bei einer weiteren Weiterbildung der erfindungsgemässen Fördervorrichtung weist der Pulverförderer einen Injektor auf.

Bei einer alternativen Ausführungsform der erfindungsgemässen Fördervorrichtung weist der Pulverförderer einen unter Druck setzbaren Arbeitsbehälter mit einem Pulvereinlass und einem Pulverauslass auf, wobei der Pulverauslass mit dem Absperrelement verbunden ist. Die Pulverleitung weist eingangsseitig einen Einlass für Transportgas auf.

Bei einer zusätzlichen Ausführungsform der erfindungsgemässen Fördervorrichtung ist die Steuer- und Auswerteinheit derart ausgebildet und betreibbar, dass sie die steuerbare Druckgasquelle so steuert, dass sich ein bestimmter Beschichtungspulver-Massenstrom einstellt.

Bei einer Ausführungsform der erfindungsgemässen Fördervorrichtung ist eine Pulverversorgungsleitung vorgesehen, über die der Pulverförderer mit Beschichtungspulver aus einem Pulvervorratsbehälter versorgbar ist.

Vorteilhafterweise kann bei der erfindungsgemässen Fördervorrichtung zum Fördern von Beschichtungspulver auch ermittelt werden, ob die Pulverleitung verstopft ist.

Zudem kann durch die Messvorrichtung bei der erfindungsgemässen Fördervorrichtung auch ermittelt werden, ob in der Pulverleitung eine Leckage vorhanden ist.

Ein weiterer Vorteil der Messvorrichtung ist, dass mit ihr beim Fördern von Beschichtungspulver erkannt werden kann, ob das Beschichtungspulver schwallweise durch die Pulverleitung strömt.

Darüber hinaus hat die Messvorrichtung den Vorteil, dass mit ihr erkannt werden kann, ob bei der Beschichtungsvorrichtung die Pulverleitung ungünstig beziehungsweise nicht optimal verlegt ist.

Das erfindungsgemässe Verfahren zum Messen des Beschichtungspulver-Massenstroms mit der oben angegebenen Messvorrichtung umfasst folgende Schritte. Die Steuer- und Auswerteeinheit wird in den Offset-Modus gebracht. Mittels der Einstelleinrichtung wird die Pulverleitung mit Druckgas beaufschlagt und der Beschichtungspulverfluss in der Pulverleitung unterbunden. Mit dem Drucksensor wird der Druck in der Pulverleitung erfasst und als Offset-Druckwert interpretiert. Die Steuer- und Auswerteeinheit wird in den Betriebsmodus gebracht, mit Hilfe der Einstelleinrichtung wird der Beschichtungspulverfluss in der Pulverleitung freigeben, und mit dem Drucksensor wird der Druck in der Pulverleitung erfasst. Mit Hilfe des erfassten Drucks, des Offset-Druckwerts und des Korrekturwerts wird mit der Steuer- und Auswerteeinheit der durch die Pulverleitung strömende Beschichtungspulver-Massenstrom ermittelt.

**Kurze Beschreibung der Zeichnungen**

Im Folgenden wird die Erfindung mit mehreren Ausführungsbeispielen anhand von 19 Figuren weiter erläutert.

Figur 1   zeigt in Form eines Blockdiagramms eine erste mögliche Ausführungsform einer Beschichtungsvorrichtung mit einer ersten möglichen Ausführungsform der erfindungsgemässen Messvorrichtung zum Messen des Beschichtungspulver-Massenstroms.

Figur 2   zeigt in Form eines Blockdiagramms eine zweite Beschichtungsvorrichtung mit einer zweiten möglichen Ausführungsform der erfindungsgemässen Messvorrichtung zum Messen des Beschichtungspulver-Massenstroms.

Figur 3   zeigt in Form eines Blockdiagramms eine dritte mögliche Ausführungsform der Beschichtungsvorrichtung mit der Messvorrichtung zum Messen des Beschichtungspulver-Massenstroms.

Figur 4   zeigt in Form eines Blockdiagramms eine vierte mögliche Ausführungsform der Beschichtungsvorrichtung mit einer weiteren möglichen Ausführungsform der Messvorrichtung zum Messen des Beschichtungspulver-Massenstroms.

Figur 5   zeigt in einem Flussdiagramm einen möglichen Ablauf eines Messverfahrens für die Beschichtungsvorrichtungen.

Figur 6   zeigt in einem weiteren Flussdiagramm eine Unterprozedur des Messverfahrens.

Figur 7   zeigt eine mögliche Ausführungsform der Beschichtungsvorrichtung mit einem Injektor.

Figur 8   zeigt eine mögliche Ausführungsform der Beschichtungsvorrichtung gemäss Figur 4.

Figur 9   zeigt den prinzipiellen Aufbau eines Influenzsensors.

Figur 10   zeigt den prinzipiellen Aufbau eines Drucksensors.

Figur 11   zeigt eine mögliche Ausführungsform einer Sensorkupplung, die Teil des Drucksensors sein kann.

Figur 12   zeigt die Sensorkupplung in der Draufsicht.

Figur 13   zeigt die Sensorkupplung in der Seitenansicht im Schnitt.

Figur 14   zeigt die Sensorkupplung von vorne.

Figur 15   zeigt eine Schiene mit mehreren Sensorkupplungen, die darauf aufgereiht sind.

Figur 16   zeigt beispielhaft den Verlauf des Beschichtungspulver-Massenstroms in Abhängigkeit vom Fördergas-Volumenstrom für die Beschichtungsvorrichtung gemäss Figur 1, 2 oder 3.

Figur 17   zeigt beispielhaft den Verlauf des Beschichtungspulver-Massenstroms in Abhängigkeit von der Öffnungsdauer des Auslassventils für die Beschichtungsvorrichtung gemäss Figur 4.

Figur 18   zeigt den Druckverlauf in Abhängigkeit von der Zeit bei verschiedenen Ereignissen.

Figur 19   zeigt eine vorteilhafte Schlauchverlegung.

**Wege zur Ausführung der Erfindung**

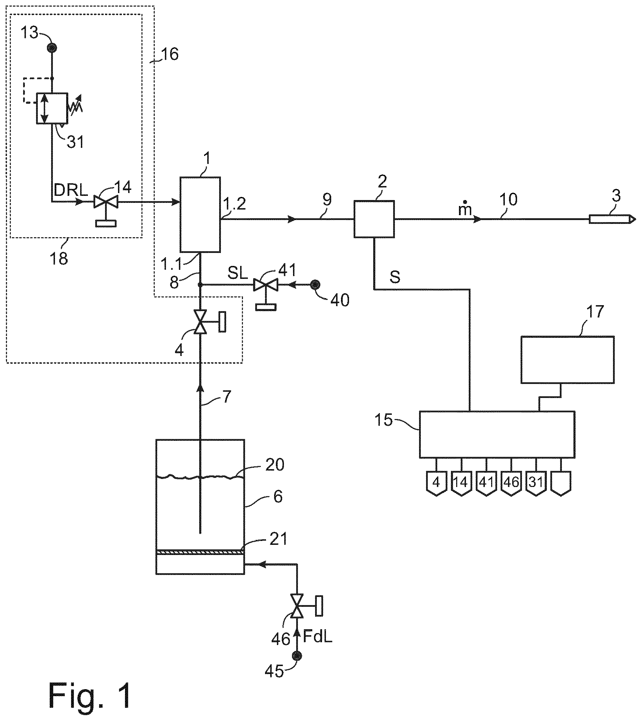

Das Blockdiagramm in Figur 1 zeigt eine erste mögliche Ausführungsform der Beschichtungsvorrichtung mit einer ersten möglichen Ausführungsform der Fördervorrichtung für Beschichtungspulver und einer ersten möglichen Ausführungsform der Messvorrichtung zum Messen des Beschichtungspulver-Massenstroms $\dot{m}$.

Die Beschichtungsvorrichtung zum Beschichten eines Werkstücks mit Beschichtungspulver umfasst die Fördervorrichtung mit einem Pulverförderer 1 und einen Pulvervorratsbehälter 6, aus dem der Pulverförderer 1 über eine Pulverleitung 7, 8 mit Beschichtungspulver 20 versorgbar ist. Der mit Druckgas betreibbare Pulverförderer 1 weist einen Pulvereinlass 1.1 und einen Pulverauslass 1.2 auf. Des Weiteren ist eine Einstelleinrichtung 16 vorgesehen, mit der der Pulvereinlass 1.1 des Pulverförderers 1 verschliessbar ist. Der Pulverförderer 1 ist auslassseitig mit einer Pulverleitung 9, 10 verbunden. Über die Pulverleitung 9, 10 wird ein Pulverapplikator 3 mit Beschichtungspulver versorgt. Als Pulverapplikator oder Sprühapplikator 3 oder kurzum als Applikator kann zum Beispiel eine manuelle oder eine automatische Pulversprühpistole dienen. Um den in der Pulverleitung 9, 10 herrschenden Druck p messen zu können, ist ein Drucksensor 2 vorgesehen.

Die Einstelleinrichtung 16 umfasst ein Absperrelement 4, das beispielsweise ein Ventil sein kann. Das Absperrelement 4 befindet sich in der Pulverleitung 7, 8 und kann den Beschichtungspulverfluss in der Pulverleitung 7, 8 unterbinden oder freigeben. Die Ansteuerung des Absperrelements 4 erfolgt über eine Steuer- und Auswerteeinheit 15. Die Steuer- und Auswerteeinheit 15 kann mit der Einstelleinrichtung 16 kabelgebunden oder kabellos verbunden sein. Die Verbindung zum Absperrelement 4 ist durch die eingerahmte Ziffer 4 unterhalb der Steuerung 15 angedeutet. Die Einstelleinrichtung 16 umfasst zudem eine steuerbare Druckgasquelle 18, über die der Pulverförderer 1 mit Druckgas DRL versorgt werden kann. Die Druckgasquelle 18 weist ein steuerbares Ventil 14 auf, über das das Druckgas DRL dem Pulverförderer 1 zuführbar ist. Die Ansteuerung des Ventils 14 erfolgt ebenfalls über die Steuer- und Auswerteeinheit 15. Die Steuer- und Auswerteeinheit 15 wird im Folgenden auch kurzum als Steuerung bezeichnet. Die Druckgasquelle 18 kann zudem ein Druckregelventil 31 aufweisen, um das von einer Druckgasquelle 13 zur Verfügung gestellte Druckgas DRL auf einem konstanten Druckwert zu halten.

Wenn hier von Druckgas die Rede ist, so ist damit ein Gas oder auch ein Gemisch aus verschiedenen Gasen gemeint, das unter Druck gesetzt ist, dessen Druck also höher als der atmosphärische Druck ist. Das Gemisch aus verschiedenen Gasen kann beispielsweise Luft sein, die sich bekanntermassen primär aus Stickstoff und Sauerstoff und zu einem kleinen Teil aus anderen Gasen (vor allem Argon) zusammensetzt. Der atmosphärische Druck ist von der geografischen Höhe abhängig.

Prinzipiell kann der Drucksensor 2 an einer beliebigen Stelle in der Pulverleitung 9, 10 angeordnet sein und den in der der Pulverleitung 9, 10 herrschenden Druck p an einer beliebigen Stelle in der Pulverleitung 9, 10 erfassen. Das vom Drucksensor 2 erzeugte Drucksignal S wird der Steuerung 15 zugeführt.

Die Pulverleitung 9, 10 kann sich bis in den Pulverförderer 1 hinein erstrecken. Sie kann also zum Beispiel dort beginnen, wo die Pulverleitung 8 endet. Die Pulverleitung 9, 10 kann sich auch bis in den Sprühapplikator 3 hinein erstrecken und zum Beispiel an der Mündung des Sprühapplikators 3 enden. Je nach Bedarf kann die Pulverleitung 9, 10 ganz oder teilweise als Schlauch ausgebildet sein.

Vorzugsweise im unteren Bereich des Pulvervorratsbehälters 6 befindet sich eine vorzugsweise horizontal verlaufende, poröse Trennwand 21, die für Fluidisiergas FdL durchlässig ist. Das oberhalb der porösen Trennwand 21 befindliche Pulver 20 wird mit dem von unten durch die poröse Trennwand 21 hindurchgeleiteten Fluidisiergas FdL aufgewirbelt und in einen Schwebezustand versetzt. Das oberhalb der Trennwand 21 befindliche, fluidisierte Pulver 20 kann aus dem Pulvervorratsbehälter 6 über die Pulverleitung 7, 8 zum Pulverförderer 1 transportiert werden. Um das Fluidisiergas FdL steuern zu können, ist in der Leitung zwischen der Druckgasquelle 45 und dem Pulvervorratsbehälter 6 ein Ventil 46 vorgesehen. Das Ventil 46 kann zum Beispiel als Luftmengenregel-Ventil ausgebildet sein. Zudem kann eine Rüttelvorrichtung, die zum Beispiel einen Rüttelmotor aufweist (in Figur 1 nicht gezeigt), am Pulvervorratsbehälter 6 montiert sein, um die Erzeugung eines homogenen Pulver-Gas-Gemisches zu unterstützen.

Des Weiteren kann ein Spülgasanschluss 40 vorgesehen sein, der Spülgas SL zur Verfügung stellt. Mit einem Ventil 41 kann die Spülleitung, den Spülgasanschluss 40 über die Pulverleitung 8 mit dem Pulverförderer 1 verbindet, unterbrochen werden. Wenn das Ventil 41 geöffnet ist, strömt das Spülgas SL durch die Pulverleitung 8, den Pulverförderer 1, die Pulverleitung 9, 10 und den Sprühapplikator 3. Dabei wird mit dem Spülgas SL das dort befindliche Pulver über den Sprühapplikator 3 entfernt und so die Beschichtungsvorrichtung gereinigt.

Messung des Beschichtungspulver-Massestroms

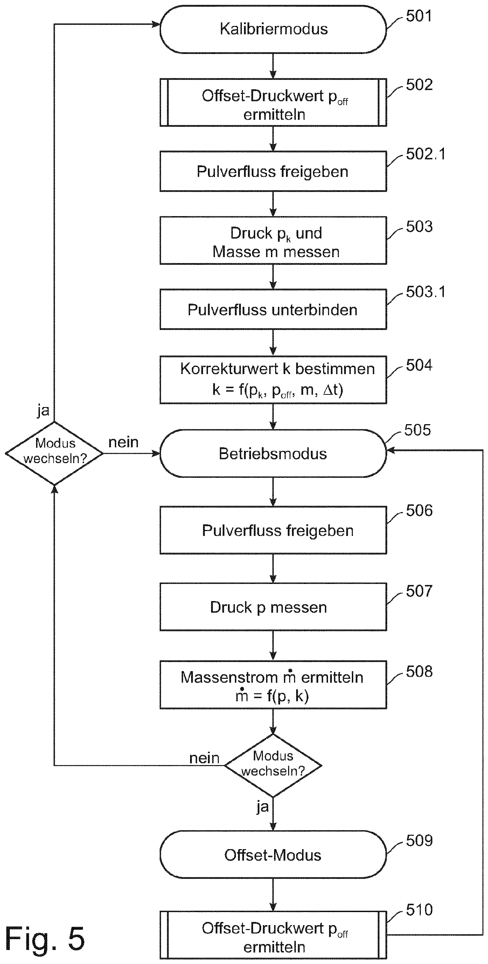

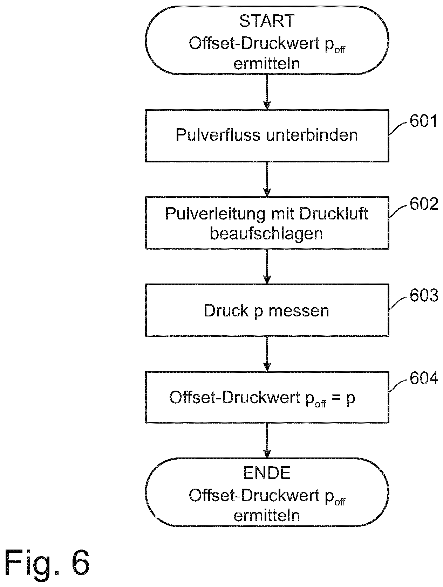

Die Messung des Beschichtungspulver-Massenstroms $\dot{m}$, der im Folgenden auch als Pulvermassenstrom oder kurzum als Massenstrom bezeichnet wird, kann, wie in den Flussdiagrammen in Figuren 5 und 6 dargestellt, wie folgt erfolgen.

Wenn die Beschichtungsvorrichtung (Beschichtungsanlage) zum ersten Mal in Betrieb genommen wird, wird vorzugsweise zu Beginn eine Kalibrierung vorgenommen. Bei Bedarf kann die Kalibrierung auch wiederholt vorgenommen werden. Ziel der Kalibrierung ist es, einen sogenannten Korrekturwert k zu bestimmen. Dazu geht die Steuer- und Auswerteeinheit 15 in einen Kalibriermodus 501. Im Kalibriermodus 501 wird mittels der Einstelleinrichtung 16 der Beschichtungspulverfluss in der Pulverleitung 9, 10 unterbunden (Schritt 502 und 601) und die Pulverleitung 9, 10 mit Druckgas beaufschlagt (Schritt 602). Mit dem Drucksensor 2 wird nun der Druck p in der Pulverleitung 9, 10 erfasst (Schritt 603) und als Drucksignal S der Steuerung 15 zugeführt. Die Steuerung 15 interpretiert den in diesem Anlagenzustand ermittelten Druck p als Offset-Druckwert $p_{off}$ (Schritt 604). Die Schritte 601 bis 604 werden als erste Phase bezeichnet.

Das oben beschriebene Verfahren liefert einen besonders genauen Offsetwert $p_{off}$. Je genauer der Offsetwert $P_{off}$ ist, desto genauer kann auch der Beschichtungspulver-Massenstrom $\dot{m}$ ermittelt werden.

Anschliessend gibt die Einstelleinrichtung 16 den Beschichtungspulverfluss in der Pulverleitung 9, 10 frei (Schritt 502.1) und es wird dafür gesorgt, dass mit Hilfe des Pulverförderers 1 Pulver durch die Leitung 9, 10 gefördert wird. Nun wird die Pulvermasse m ermittelt, die während einer bestimmten Zeitdauer Δt durch die Leitung 9, 10 strömt (Schritt 503). Dies wird auch als Auslitern Phase bezeichnet. Zudem wird mit dem Drucksensor 2 der Druck p in der Pulverleitung 9, 10 erneut erfasst (Schritt 503). Optional kann vorgesehen sein, dass der Beschichtungspulverfluss anschliessend wieder unterbunden wird (Schritt 503.1). Dies wird als zweite Phase bezeichnet. Die Steuerung 15 interpretiert diesen während der Zeitdauer Δt erfassten Druck als Druckwert $p_k$. Aus der so ermittelten Pulvermasse m, dem während der Zeitdauer Δt in der Leitung 9, 10 herrschenden Druckwert $p_k$ und dem Offset-Druckwert $p_{off}$ ermittelt die Steuerung 15 zum Beispiel mit der folgenden Formel den Korrekturwert k (Schritt 504):

$$k = \frac{m}{p_k - p_{off}}$$

Damit ist die Kalibrierung abgeschlossen.

Da in der Regel der Druck p während der ersten Phase nicht exakt konstant ist, kann vorgesehen sein, dass der Offset-Druckwert $p_{off}$ ein über eine definierte Zeitdauer gemittelter Druckwert ist. Sinngemäss das Gleiche gilt auch für den Druckwert $p_k$. Da in der Regel der Druck p auch während der zweiten Phase nicht exakt konstant ist, kann vorgesehen sein, dass der Druckwert $p_k$ der über die Zeitdauer Δt gemittelte Druckwert ist.

Wenn der Steuerung 15 der Korrekturwert k vorliegt, kann sie in einen weiteren Modus wechseln, der im Folgenden als Betriebsmodus bezeichnet wird. Befindet sich die Steuerung 15 im Betriebsmodus (Schritt 505), wird mittels der Einstelleinrichtung 16 der Beschichtungspulverfluss in der Pulverleitung 9, 10 freigegeben (Schritt 506). Sobald der Pulverförderer 1 Pulver durch die Pulverleitung 9, 10 transportiert, wird mit dem Drucksensor 2 der Druck p in der Pulverleitung 9, 10 erfasst und als Drucksignal S der Steuerung 15 zugeführt (Schritt 507). Die Steuerung 15 interpretiert den im Betriebsmodus ermittelten Druck p als Druckwert $p_{mess}$. Nun kann die Steuerung 15 anhand des Druckwerts $p_{mess}$, des Offset-Druckwerts $p_{off}$ und des Korrekturwerts k den durch die Pulverleitung 9, 10 strömenden Beschichtungspulver-Massenstrom m zum Beispiel anhand der folgenden Formel ermitteln (Schritt 508):

$$\dot{m} = k \cdot (p_{mess} - p_{off})$$

Die Beschichtungsvorrichtung kann eine Anzeige 17 aufweisen, auf der Beschichtungspulver-Massenstrom $\dot{m}$ zum Beispiel in g/min oder kg/h ausgegeben wird.

Wenn die Steuerung 15 eine nicht beabsichtigte Änderung des Beschichtungspulver-Massenstroms $\dot{m}$ feststellt, kann sie dies dem Bedienpersonal signalisieren oder entsprechend automatisch nachregeln, sodass wieder der Sollwert des Beschichtungspulver-Massenstroms erreicht wird.

Ablagerungen in der Pulverleitung 8, 9 können zu einer Drift führen. Mit der Messvorrichtung ist dies erkennbar. Die Steuerung 15 kann, wenn eine derartige Veränderung detektiert wurde, über die Anzeige 17 eine entsprechende Meldung an das Bedienpersonal ausgeben und zum Beispiel vorschlagen, dass die Pulverleitung gespült werden sollte.

Die Steuerung 15 bleibt so lange im Betriebsmodus 505 bis zum Beispiel eine bestimmte Zeitdauer verstrichen ist (zum Beispiel 1 Stunde oder 1 Tag) oder eine Beschichtungspause erfolgt. Anschliessend wechselt die Steuerung in den Offset-Modus 509 und ermittelt erneut den Offset-Druckwert $p_{off}$.

Im Laufe der Zeit tritt an verschiedenen Komponenten einer Beschichtungsanlage unweigerlich Verschleiss auf. Dadurch ändern sich die Betriebsparameter der Beschichtungsanlage, sodass es zweckdienlich sein kann, den Offset-Druckwert $p_{off}$ nachzuführen.

Die Steuerung 15 kann dazu in einen weiteren Modus gebracht werden, der im Folgenden als Offset-Modus bezeichnet wird. Wenn sich die Steuerung 15 im Offset-Modus befindet (Schritt 509), wird mittels der Einstelleinrichtung 16 der Beschichtungspulverfluss in der Pulverleitung 9, 10 unterbunden (Schritt 601) und die Pulverleitung 9, 10 wird mit Druckgas beaufschlagt (Schritt 602). Mit dem Drucksensor 2 wird nun der Druck p in der Pulverleitung 9, 10 erfasst und als Drucksignal S der Steuerung 15 zugeführt (Schritt 603). Die Steuerung 15 interpretiert den in diesem Anlagenzustand ermittelten Druck p als neuen Offset-Druckwert $p_{off2}$ (Schritt 604). Dieser Ablauf ist in der Regel der Gleiche wie jener aus der ersten Phase des Kalibriermodus 501.

Falls der neue Offset-Druckwert $p_{off2}$ vom bisherigen Offset-Druckwert $p_{off}$ über ein bestimmtes Mass abweicht, kann zum Beispiel von der Steuerung 15 und die Anzeige 17 eine Meldung an das Betriebspersonal ausgegeben werden. Zudem ist es möglich, dass die Steuerung 15 den Offset-Druckwert $p_{off}$ entsprechend aktualisiert, sie also von nun an den neuen Offset-Druckwert $p_{off2}$ als Offset-Druckwert $p_{off}$ interpretiert.

Vom Bedienpersonal können Änderungen an der Beschichtungsanlage vorgenommen werden. So können zum Beispiel ein oder mehrere Pulverleitungen durch Pulverleitungen mit anderer Länge und/oder anderem Querschnitt ersetzt werden. In diesem Fall kann es hilfreich sein die Kalibration erneut vorzunehmen. Die Steuer- und Auswerteinheit 15 kann so ausgebildet sein, dass sie derartige Veränderungen erkennt und automatisch in den Kalibriermodus 501 wechselt.

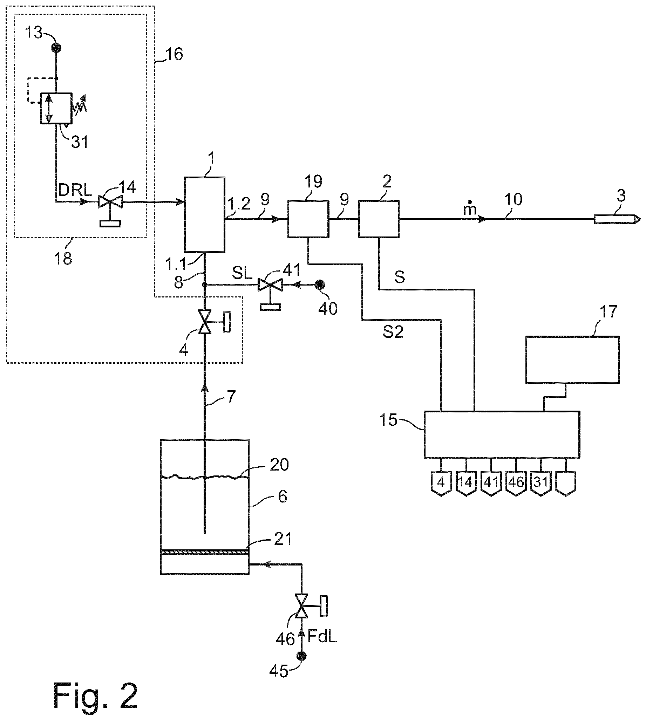

Wenn die Steuer- und Auswerteeinheit 15 entsprechend ausgebildet ist, sodass beispielsweise Referenzwerte für die Pulverleitungen hinterlegt sind, kann es auch genügen, lediglich den Offset-Druckwert $p_{off}$ erneut zu ermitteln. Im Blockdiagramm in Figur 2 ist eine zweite Beschichtungsvorrichtung mit einer zweiten möglichen Ausführungsform der Messvorrichtung zum Messen des Beschichtungspulver-Massenstroms $\dot{m}$ dargestellt. Die Beschichtungsvorrichtung unterscheidet sich von der in Figur 1 gezeigten Beschichtungsvorrichtung nur in Bezug auf die Messvorrichtung. Die Messvorrichtung gemäss Figur 2 umfasst zusätzlich zu der aus Figur 1 einen Pulversensor 19. Der Pulversensor 19 befindet sich zwischen dem Pulverförderer 1 und dem Drucksensor 2. Alternativ dazu kann der Pulversensor 19 auch auf der stromabwärtigen Seite des Drucksensors 2 in der Pulverleitung 10 oder auch im Applikator 3 angeordnet sein. Der Pulversensor 19 erfasst, ob Pulver durch die Leitung 9, 10 beziehungsweise den Applikator 3 strömt und übermittelt ein entsprechendes Messignal S2 an die Steuerung 15.

Der Pulversensor 19 kann zum Beispiel als Influenzsensor oder als optischer Sensor ausgebildet sein. Sowohl der Influenzsensor als auch der optische Sensor haben den Vorteil, dass die Messung berührungslos erfolgt und der Pulverstrom in der Pulverleitung 9, 10 durch die Messung nicht beeinflusst wird.

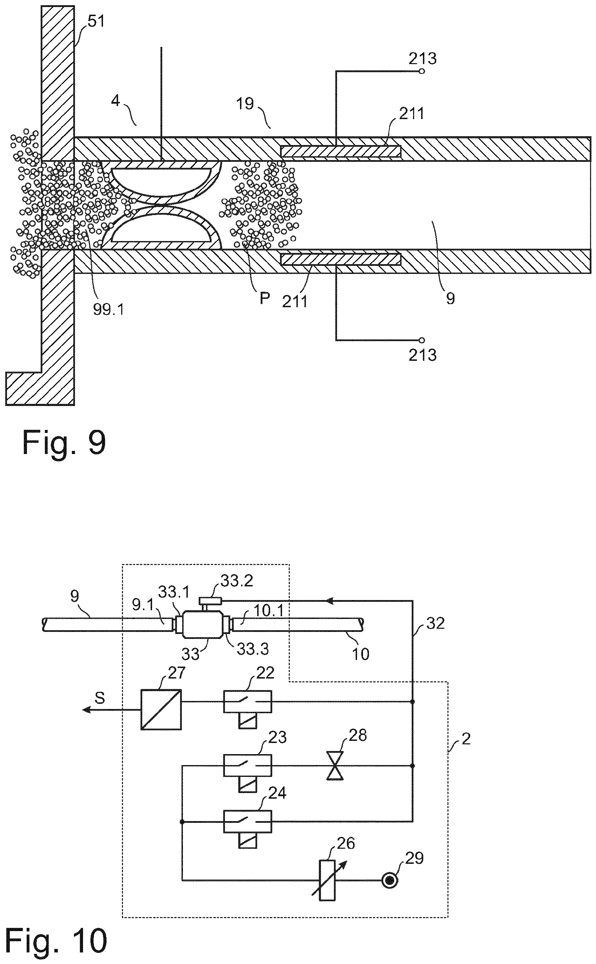

Das Messprinzip des in Figur 9 schematisch dargestellten Influenz-Sensors 19 beruht auf der Influenzwirkung elektrisch geladener Pulverpartikel P. Nähert man ein felderzeugendes, zum Beispiel positiv geladenes Pulverpartikel P oder kurzum Partikel der neutralen, isoliert angeordneten Messelektrode 211, so werden die Elektronen an jenes Ende der Messelektrode 211 gezogen, das dem geladenen Partikel P zugewandt ist. An diesem Ende bildet sich eine negative Ladung. An der dem Partikel abgewandten Seite der Messelektrode 211 bildet sich ein Elektronenmangel und folglich eine positive Ladung. In einem Nichtleiter mit ortsgebundenen Ladungen tritt nur molekulare Dipolbildung auf.

Strömt ein Partikel durch den Erfassungsbereich der ringförmigen Messelektrode 211, so entsteht ein erster Stromimpuls beim Eintritt des Partikels in den Erfassungsbereich der Messelektrode 211 und ein zweiter Stromimpuls mit umgekehrten Vorzeichen beim Austritt des Partikels. Eine vorherige, gezielte Aufladung der Partikel ist in der Regel nicht erforderlich.

Die Gesamtheit der elektrisch geladenen Partikel erzeugt eine Raumladungswolke, die wiederum ein entsprechendes elektrisches Feld erzeugt. Das elektrische Feld wandert zusammen mit den Partikeln durch den Erfassungsbereich der Messelektrode 211. Unter dem Einfluss des elektrischen Feldes kommt es zu einer vorübergehenden Ladungsverschiebung der in der Messelektrode frei beweglichen Elektronen (Influenz). Dabei weist die in der Messelektrode 211 influenzierte Ladung den gleichen Betrag auf wie die Ladung jenes Teils der Raumladungswolke, der sich im Erfassungsbereich der Messelektrode 211 befindet. Wenn sich die Raumladungswolke in der Pulverleitung 9 bewegt, wird in der Messelektrode 211 ein Strom i(t) generiert, dessen Höhe von der Geschwindigkeit v(t) der Wolke abhängt, mit der sie durch die Pulverleitung 9 strömt.

Für die Raumladungsdichte $\rho$ gilt:

$$\rho((r, \alpha, z)T, t) = e \cdot n \cdot N((r, \alpha, z)T, t)$$

Wobei gilt:

N = Anzahlkonzentration,

n = mittlere Ladungszahl der Partikel,
e = Elementarladung,
r, $\alpha$, z = Ortskoordinaten,
t = Zeit,
T = Transponierung.

Die von der Messelektrode 211 umschlossene Ladung q kann durch folgende Gleichung beschrieben werden:

$$q(t) = \int \rho((r, \alpha, z)T, t)dV = \varepsilon \oint E((r, \alpha, z)T, t)dS$$

Darin sind:

E = elektrische Feldstärke,
$\varepsilon$ = dielektrische Leitfähigkeit,
V = Volumen, das von der Elektrode 211 umschlossen wird,
S = geschlossene Fläche.

Für den am Ausgang des Influenz-Partikelsensors 19 gemessenen Strom i gilt:

$$i(t) = -\frac{d}{dt}q(t)$$

i = Strom von der Messelektrode 211 zur Masse

Der Strom i kann als Messsignal S2 am Messsignalanschluss 213 abgegriffen und über eine zwischengeschaltete Sensorelektronik oder direkt der Steuerung 15 zugeführt werden.

Die Messung des Pulvermassenstroms kann auf die oben beschriebene Art (siehe Abschnitt Messung des Beschichtungspulver-Massestroms) erfolgen.

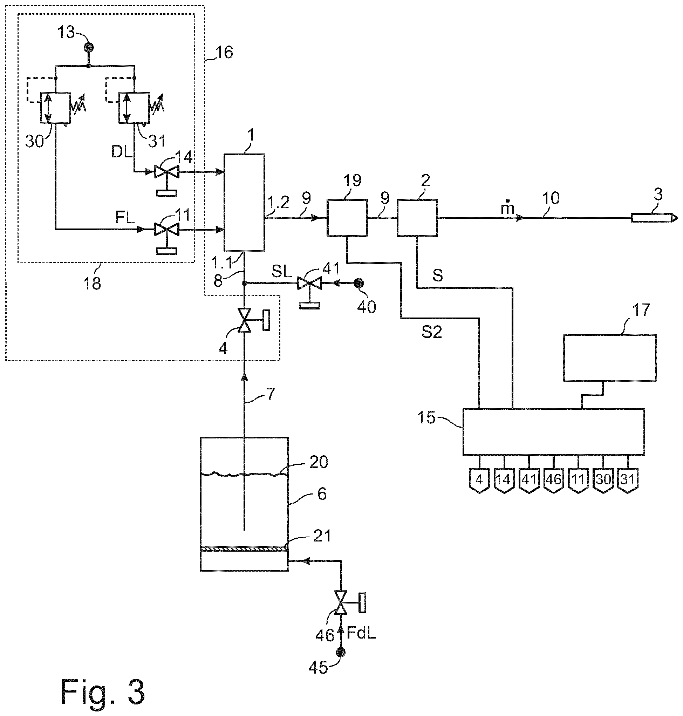

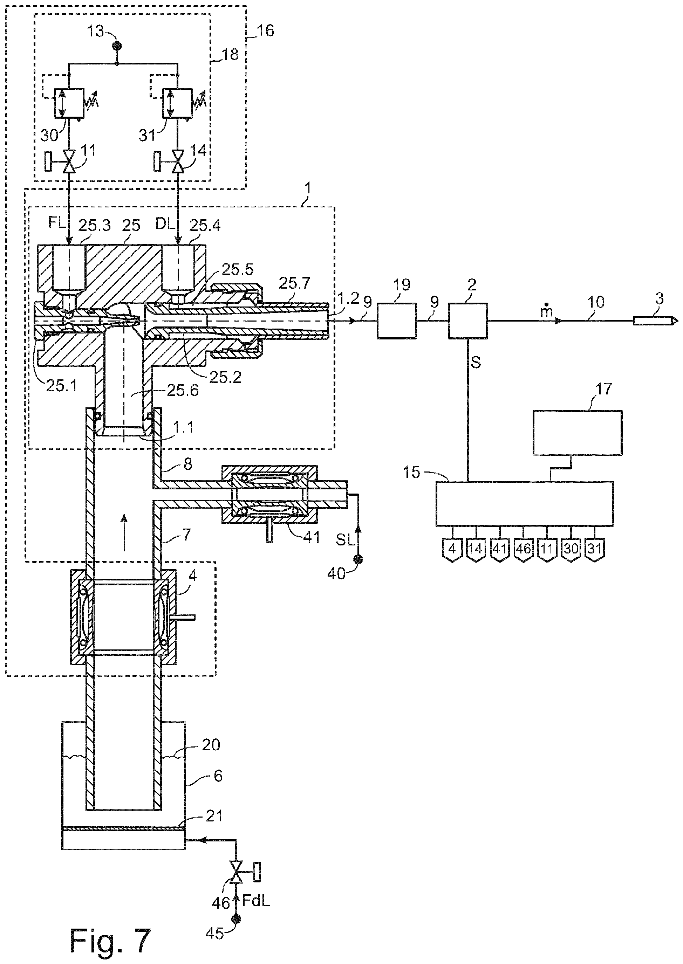

In Figur 3 ist eine weitere Ausführungsform der Beschichtungsvorrichtung mit der Messvorrichtung zum Messen des Beschichtungspulver-Massenstroms $\dot{m}$ dargestellt. Diese Beschichtungsvorrichtung unterscheidet sich von der aus Figur 2 in Bezug auf die Einstelleinrichtung 16. Die Einstelleinrichtung 16 umfasst in Figur 3 neben der Druckgasquelle 13 nicht nur das Druckregelventil 31 und das Ventil 14, sondern zusätzlich ein weiteres Druckregelventil 30 und ein weiteres Ventil 11. Über das das Druckregelventil 30 und das Ventil 11 wird dem Pulverförderer 1 Fördergas FL und über das Druckregelventil 31 und das Ventil 14 Dosiergas DL zugeführt. Ein zu dieser Konfiguration passender Pulverförderer 1 ist in Figur 7 gezeigt.

Die Einstelleinrichtung 16 kann so betrieben werden, dass sie einen Druckgas-Volumenstrom $\dot{V}$ erzeugt, der gerade so gross ist, dass gerade kein Pulver über die Pulverleitung 7, 8 angesaugt wird. Der Druckgas-Volumenstrom $\dot{V}$ setzt sich dabei aus den beiden Gasströmen Fördergas-Volumenstrom $\dot{V}FL$ und Dosiergas-Volumenstrom $\dot{V}DL$ zusammen.

Die Druckregelung von Fördergas FL und Dosiergas DL kann mit Hilfe eines Gesamtluftreglers erfolgen. Die Aufteilung des Druckgas-Volumenstroms $\dot{V}$ in Fördergas-Volumenstrom $\dot{V}FL$ und Dosiergas-Volumenstrom $\dot{V}DL$ kann beispielsweise mit einer gesteuerten Spindel mit Schrittmotorantrieb erfolgen. Alternativ dazu kann der Druckgas-Volumenstrom $\dot{V}$ auch mit einem separaten Regler für Fördergas und einem separaten Regler Dosiergas eingestellt werden. Vorteilhafter Weise sind die beiden Regler als Präzisionsregler ausgebildet.

Die Messung des Pulvermassenstroms kann auf die oben beschriebene Art (siehe Abschnitt Messung des Beschichtungspulver-Massestroms) erfolgen.

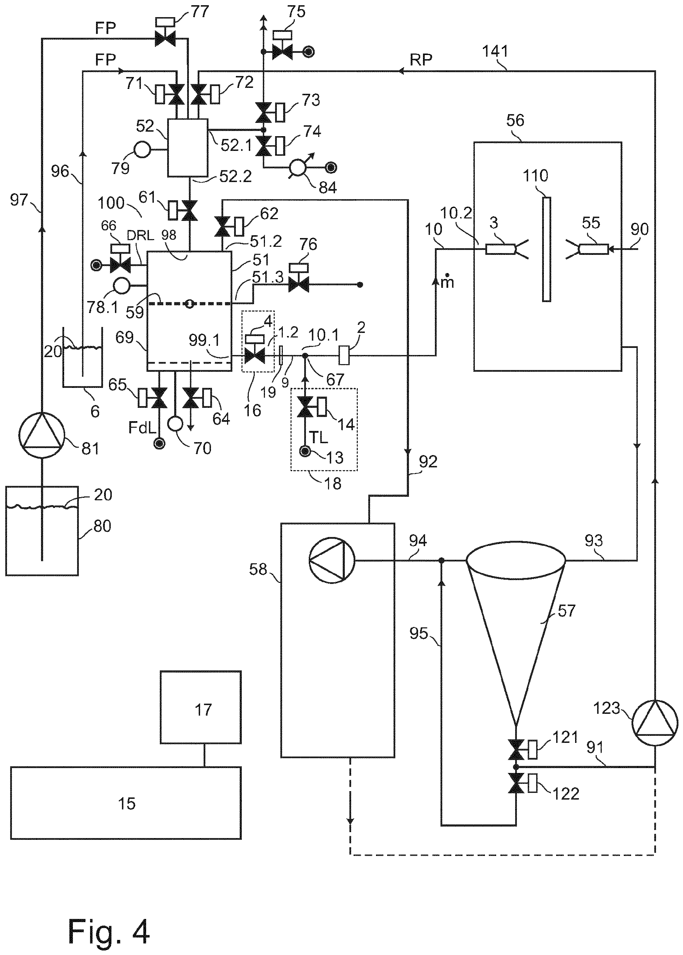

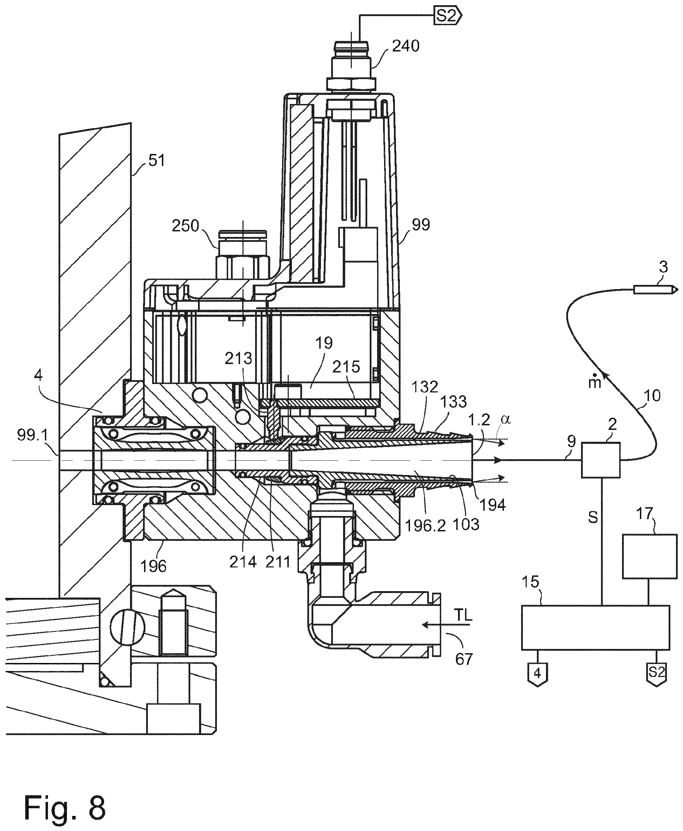

Figur 4 zeigt in einem Blockdiagramm eine vierte Ausführungsform einer Beschichtungsanlage mit einer Pulverfördervorrichtung 100. Ein Ausschnitt der Pulverfördervorrichtung 100 ist in Figur 8 im Detail dargestellt. Die Pulverfördervorrichtung 100 zum Fördern von Beschichtungspulver zu einem Pulverapplikator 3 umfasst einen Arbeitsbehälter 51. Dieser ist druckdicht ausgebildet, damit er unter Druck gesetzt werden kann. Der maximale Arbeitsdruck im Arbeitsbehälter 51 liegt vorzugsweise unter 0,5 bar, weil dann die Europäische Druckgeräterichtlinie 2014/68/EU beziehungsweise Pressure Equipment Directive 2014/68/EU nicht zur Anwendung kommen muss und folglich geringere technische Anforderungen an den Aufbau des Arbeitsbehälters 51 gestellt werden.

In einer Ausführungsform umfasst der Arbeitsbehälter 51 einen Pulvereinlass 98 und einen Pulverauslass 99.1. Der Pulverauslass 99.1 ist mit dem Absperrelement 4 verbunden, das zum Beispiel ein Pulverauslassventil sein kann. Über die Pulverleitung 9 ist der Pulverauslass des Absperrelements 4 mit dem Drucksensor 2 verbunden. Zwischen das Absperrelement 4 und den Drucksensor 2 kann der Pulversensor 19 geschaltet sein. An den Drucksensor 2 schliesst sich die weitere Pulverleitung 10 an. Ihr eingangsseitiger Endbereich 10.1 ist mit dem Auslass des Drucksensors 2 verbunden. Im Folgenden bezeichnet der Begriff eingangsseitig den eingangsseitigen Endbereich 10.1 der Pulverleitung 10, der sich auf der stromaufwärtigen Seite der Pulverleitung 10 befindet.

Die Pulverleitung 10 weist eingangsseitig zusätzlich zum Auslass des Pulverauslassventils 4 auch einen Einlass 67 für Transportgas TL auf. Wie bei den Ausführungsformen gemäss Figur 1 bis 3 ist auch in Figur 4 die Pulverleitung 10 ausgangsseitig mit dem Pulverapplikator 3 verbunden. Im Folgenden bezeichnet der Begriff ausgangsseitig den ausgangsseitigen Endbereich 10.2 der Pulverleitung 10, der sich auf der stromabwärtigen Seite der Pulverleitung 10 befindet.

Der Pulverauslass 99.1 befindet sich vorzugsweise im unteren Bereich des Arbeitsbehälters 51. Dies hat den Vorteil, dass das gesamte Pulver ohne weiteres aus dem Arbeitsbehälter 51 heraustransportiert werden kann. Im unteren Bereich des Arbeitsbehälters 51 befindet sich auch eine Fluidisiereinrichtung 69, mit der das im Arbeitsbehälter 51 befindliche Pulver fluidisiert werden kann. Die Fluidisiereinrichtung 69 weist eine vorzugsweise horizontal verlaufende Trennwand aus einem porösem Material auf, das zum Beispiel ein semipermeables, für Luft durchlässiges Material sein kann. Das oberhalb der porösen Trennwand befindliche Pulver wird mit von unten durch die poröse Trennwand hindurchgeleiteter Fluidisierluft FL aufgewirbelt und in einen Schwebezustand versetzt. Das oberhalb der Fluidisiereinrichtung 69 befindliche fluidisierte Pulver kann dann aus dem Arbeitsbehälter 51 durch den Pulverauslass 99.1 heraustransportiert werden. Um das Fluidisiergas FdL steuern zu können, ist ein Ventil 65 vorgesehen. Das Ventil 65 kann zum Beispiel als Luftmengenregel-Ventil ausgebildet sein. Zudem kann eine Rüttelvorrichtung 70, die zum Beispiel einen Rüttelmotor aufweist, am Arbeitsbehälter 51 montiert sein, um die Erzeugung eines homogenen Pulver-Luft-Gemisches zu unterstützen. Anstelle von Luft kann ebenso ein Gas, wie beispielsweise Stickstoff, verwendet werden.

Ebenfalls im unteren Bereich des Arbeitsbehälters 51 kann ein Anschluss für ein weiteres Ventil 64 vorgesehen sein. Über das Ventil 64 kann das Restpulver, das nicht bereits über den Auslass 99.1 abtransportiert wurde, aus dem Arbeitsbehälter 51 entnommen werden.

Des Weiteren kann im Arbeitsbehälter 51 ein Sieb 59 angeordnet sein, das vorzugsweise als Ultraschall-Sieb ausgebildet ist. Das Sieb 59 teilt den Innenraum des Arbeitsbehälters 51 in eine obere Kammer und in eine untere Kammer. Mit Hilfe des Siebs 59 wird das Pulver gesiebt, das über den Pulvereinlass 98 in die obere Kammer des Arbeitsbehälters 51 gelangt ist. Dabei werden Pulverklumpen und Verunreinigungen zurückgehalten. Das gesiebte und zum Abtransport bereite Pulver befindet sich in der Kammer unterhalb des Siebs 59. Um das Sieb 59 reinigen zu können, kann es aus der Horizontale herausgeschwenkt und in eine Schräglage gebracht werden, sodass das auf dem Sieb 59 liegende Restpulver und/oder das zurückgehaltene Material vom Sieb 59 herunterrutschen kann.

Am Arbeitsbehälter 51 kann zudem ein Druckluftanschluss vorgesehen sein, der über ein Ventil 66 mit einer Druckgasquelle verbunden ist. Wenn das Ventil 66 geöffnet ist, kann Druckgas DRL in den Arbeitsbehälter 51 strömen. Damit kann der Arbeitsbehälter 51 unter Druck gesetzt und der gewünschte Arbeitsdruck im Arbeitsbehälter 51 eingestellt werden. Zusätzlich oder alternativ dazu kann der gewünschte Arbeitsdruck im Arbeitsbehälter 51 auch über das zugeführte Fluidisiergas FdL erzeugt werden. In der Regel reicht das Fluidisiergas FdL aus, um den gewünschten Arbeitsdruck zu erzeugen. Wenn jedoch zum Beispiel sehr viele Pulverauslassventile 4 geöffnet sind, könnte es sein, dass das Fluidisiergas FL allein nicht ausreicht, um den Arbeitsdruck aufrecht zu erhalten. In diesem Fall wird zusätzlich Druckgas DRL benutzt, um den Arbeitsdruck aufrecht zu erhalten und um gegebenenfalls Druckschwankungen im Arbeitsbehälter 51 auszugleichen. Das Druckgas DRL kann unabhängig vom Fluidisiergas FdL zugeführt werden. Um ein gut fluidisiertes Pulver-Gas-Gemisch zu erhalten, ist es von Vorteil, wenn das Fluidisiergas FdL auf einen bestimmten Wert eingestellt ist. Der Druckgasanschluss für das Druckgas DRL kann zum Beispiel, wie in Figur 4 angedeutet, im oberen Bereich des Arbeitsbehälters 51 angeordnet sein. Wenn der Arbeitsbehälter 51 mit Sichtfenstern ausgestattet ist, kann der Druckgasanschluss auch an einer Stelle des Arbeitsbehälters 51 angebracht sein, die es ermöglicht, dass mit der Druckgas DL die Sichtfenster vom anhafteten Pulver freigeblasen werden können. Das Druckgas DRL kann auch verwendet werden, um Druckgasverluste, die durch kleinere Leckagen entstehen, zu kompensieren.

Darüber hinaus kann der Arbeitsbehälter 51 einen Entlüftungsanschluss 51.2 aufweisen, der mit einem Ventil 62 verbunden ist, das als Entlüftungsventil dient. Über das Ventil 62 kann der Entlüftungsanschluss 51.2 zum Beispiel mit dem Nachfilter 58 verbunden sein. Der Entlüftungsanschluss 51.2 und das Ventil 62 können auch dazu dienen sicherzustellen, dass der Druck im Arbeitsbehälter 51 einen bestimmten maximalen Druck nicht überschreitet. Zudem können der Entlüftungsanschluss 51.2 und das Ventil 62 benutzt werden, um den Arbeitsdruck im Arbeitsbehälter 51 konstant zu halten.

Die Pulverfördervorrichtung 100 kann zur Versorgung von vielen Pulverapplikatoren dienen (in Fig. 4 sind lediglich zwei Pulverapplikatoren 3 und 55 gezeigt). Dazu können entsprechend viele Pulverauslässe, Absperrelemente 4, Pulverleitungen 9, 10 und Messvorrichtungen für die Messungen der Pulvermassenströme am Arbeitsbehälter 51 vorgesehen sein.

Der Pulvereinlass 98 befindet sich vorzugsweise im oberen Bereich des Arbeitsbehälters 51. Er kann zum Beispiel im Deckel des Arbeitsbehälters 51 angeordnet sein. Der Pulvereinlass 98 ist über ein Pulver-Ventil 61, das beispielsweise als Quetsche ausgebildet ist, mit dem Pulverauslass 52.2 eines Zwischenbehälters 52 verbunden. Der Zwischenbehälter 52 ist in der Regel oberhalb des Arbeitsbehälters 51 angeordnet. Auf diese Weise kann die Schwerkraft ausgenutzt werden, um im Zwischenbehälter 52 befindliches Pulver nach unten in den Arbeitsbehälter 51 zu transportieren.

Bei einer Ausführungsform des Arbeitsbehälters 51 befindet sich der Pulvereinlass 98 in der Mitte des Deckels des Arbeitsbehälters 51. Dies hat den Vorteil, dass das Pulver auch auf die Mitte des Siebes 59 fällt, sodass es sich besser über das gesamte Sieb 59 verteilt. Der Pulvereinlass 98 kann sich stattdessen auch seitlich am Arbeitsbehälter 51 oberhalb des Siebs 59 befinden.

In der in Figur 4 gezeigten Ausführungsform weist der Zwischenbehälter 52 eingangsseitig einen Pulvereinlass und ein Pulvereinlassventil 71 auf, über das Frischpulver FP in den Zwischenbehälter 52 gesaugt oder gepumpt werden kann. Zudem weist der Zwischenbehälter 52 eingangsseitig einen weiteren Pulvereinlass und ein Pulvereinlassventil 72 auf, über das rezykliertes Pulver RP in den Zwischenbehälter 52 gesaugt werden kann. Die beiden Pulvereinlassventile 71 und 72 können als Quetschen ausgebildet sein. Es ist aber auch möglich am Zwischenbehälter 52 nur einen Pulvereinlass und ein Pulvereinlassventil vorzusehen, über das dann entweder Frischpulver FP oder rezykliertes Pulver RP angesaugt oder gepumpt werden kann.

Die Versorgung des Zwischenbehälters 52 kann zum Beispiel über einen Pulvervorratsbehälter 6 und eine Pulverleitung 96 erfolgen. Stattdessen kann der Zwischenbehälter 52 auch über einen Pulvervorratsbehälter 80, eine Pulverpumpe 81 und eine Pulverleitung 97 mit Frischpulver FP versorgt werden.

Häufig ist der Pulvervorratsbehälter 80 ein sogenannter Bigbag, der auch als Flexible Intermediate Bulk Container oder kurz FIBC bezeichnet wird. Der Pulvervorratsbehälter 80 beinhaltet in der Regel grössere Pulvermengen als der Pulvervorratsbehälter 6. Auch steht der Pulvervorratsbehälter 80 in der Regel weiter vom Zwischenbehälter 52 entfernt als der Pulvervorratsbehälter 6.

Beim Pulvervorratsbehälter 6 wird das Pulver über den im Zwischenbehälter 52 herrschenden Unterdruck in den Zwischenbehälter 52 gefördert. Es ist damit keine weitere Pulverfördervorrichtung notwendig und daher kostengünstig.

Wenn der Pulvervorratsbehälter 80, zum Beispiel in Form eines Bigbags, verwendet wird, werden in der Regel auch grössere Pulvermengen gefördert. Hierfür ist es von Vorteil, wenn eine zusätzliche Pulverfördervorrichtung wie zum Beispiel die Pulverpumpe 81 verwendet wird. Hier hilft der herrschende Unterdruck die Luft aus dem Zwischenbehälter 52 zu entfernen. Die überschüssige Luft im Zwischenbehälter 52 kann über die Öffnung 52.1 abgelassen werden. Somit entsteht kein Staudruck im Zwischenbehälter 52.

Es kann auch von Vorteil sein, wenn mehrere Zwischenbehälter 52 vorhanden sind, über die der Arbeitsbehälter 51 mit Pulver versorgt wird. Die Zwischenbehälter 52 (in Figur 4 ist lediglich einer gezeigt) können oberhalb vom Arbeitsbehälter 51 montiert sein. Bei der Verwendung von zwei Zwischenbehältern 52 können diese zum Beispiel phasenversetzt betrieben werden; während der eine Pulver ansaugt, also in der Ansaugphase arbeitet, transportiert der andere, der in der Auslassphase arbeitet, das Pulver in den Arbeitsbehälter 51. Auf diese Weise wird der Arbeitsbehälter 52 kontinuierlich mit Pulver befüllt. Damit lassen sich grosse Pulvermengen in den Arbeitsbehälter 52 fördern.

Der Zwischenbehälter 52 weist einen Anschluss 52.1 auf, über den der Zwischenbehälter 52 mit Druckgas beaufschlagt werden kann. Der Anschluss 52.1 ist dazu über ein Ventil 74 mit einer Druckgasquelle verbindbar. Das Ventil 74 bildet mit der Druckgasquelle eine steuerbare Druckgasquelle. Ein Druckregelventil 84, das zwischen der Druckgasquelle und dem Ventil 74 angeordnet sein kann, kann Teil der steuerbaren Druckgasquelle sein.

Über den Anschluss 52.1 kann das Druckgas auch aus dem Zwischenbehälter 52 abgelassen werden. Dazu ist der Anschluss 52.1 über ein Ventil 73 mit der Umgebung verbindbar. Über den Anschluss 52.1 kann die Druckluft aber auch aus dem Zwischenbehälter 52 abgesaugt und ein Unterdruck erzeugt werden. Dazu ist zusätzlich ein Vakuumventil 75 vorgesehen, das am Anschluss 52.1 einen Unterdruck erzeugt, wenn das Ventil 73 geöffnet ist. Das Vakuumventil 75 dient als Unterdruckerzeuger.

Die im Blockdiagramm gemäss Figur 4 dargestellten Druckgasquellen können geregelte Druckgasquellen sein, die einen konstanten Druck oder eine konstante Gasmenge erzeugen.

Bei der in Figur 8 gezeigten Ausführungsform ist am Arbeitsbehälter 51 ein Auslasskörper 196 befestigt. Das Pulverauslassventil 4 kann zum Beispiel ganz oder teilweise in den Auslasskörper 196 eingelassen sein. Der Auslasskörper 196 kann den Einlass 67 für das Transportgas TL und einen axial verlaufenden Transportgaskanal 132 aufweisen, der den stromabwärtigen Endbereich des Pulverkanals 196.2 ringförmig umgibt. Der Pulverkanal 196.2 kann, wie in Figur 8 gezeigt, trichterförmig verlaufen und sich in stromabwärtiger Richtung aufweiten. Der stromabwärtige Abschnitt des Pulverkanals 196.2 kann als separates Bauteil ausgebildet sein, das im Folgenden als Mundstück 103 bezeichnet wird. Auf der stromaufwärtigen Seite kann auf das Mundstück 103 eine Hülse 214 gesteckt sein, die die Messelektrode 211 des Influenzsensors 19 trägt. Im vorliegenden Ausführungsbeispiel ist die Messelektrode 211 ringförmig ausgebildet und über den Sensoranschluss 213 mit einer Sensorelektronik 215 verbunden. Der Sensoranschluss 213 kann, wie in Figur 8 gezeigt, als Kontaktstift ausgebildet sein und mittels einer (nicht gezeigten) Feder auf die Messelektrode 211 gedrückt werden. Die Sensorelektronik 215 des Influenzsensors 19 wiederum ist über einen elektrischen Anschluss 240 zur Übertragung des Sensorsignals S2 mit der Steuerung 15 verbunden.

Der Auslasskörper 196 kann in seinem stromabwärtigen Endbereich einen Schlauchnippel 133 aufnehmen.

Die Pulverleitung 9 beziehungsweise der Pulverschlauch kann auf den Schlauchnippel 133 geschoben und befestigt werden. Es ist hier auch eine Schlauchkupplung, zum Beispiel mit einer Schnappverbindung, vorstellbar (in den Figuren nicht gezeigt). Die Innenseite des Schlauchnippels 133 und die Aussenseite des Mundstücks 103 bilden den ringförmigen Transportgaskanal 132. Die stromabwärtigen Enden des Schlauchnippels 133 und des Mundstücks 103 bilden einen Ringspalt 194, der als stromabwärtige Öffnung des Transportgaskanals 132 dient. Zur Versorgung des Transportgaskanals 132 ist eine Querbohrung im Auslasskörper 196 vorgesehen. Das Transportgas TL strömt durch den Transportgaskanal 132 zu dessen stromabwärtigen Ende und von dort ringförmig und in einem flachen Winkel $\alpha$ in die Pulverleitung 9.

Es ist von Vorteil, wenn (wie in Figur 8 schematisch dargestellt) das Transportgas TL in einem flachen Winkel $\alpha$ ringförmig in die Pulverleitung 9 strömt.

Das Transportgas TL mittels des Ringspalts 194 in die Pulverleitung 9 einströmen zu lassen, hat mehrere Vorteile. Weil das Transportgas TL durch den Ringspalt 194 so in die Pulverleitung 9 eingeleitet wird, dass es die gleiche Richtung wie der Pulverstrom aufweist, wird am Einlass 67 eher ein Unterdruck als ein Staudruck erzeugt (kein Luftwiderstand, keine Barriere). Dadurch entstehen weniger Turbulenzen in der Pulverleitung 9. Zudem lässt sich der Verschleiss an der Wandung der Pulverleitung 9 reduzieren oder sogar gänzlich vermeiden.

Es sind auch andere Ausführungsformen für den Auslasskörper 196 möglich. Der Auslasskörper 196 kann zum Beispiel einen oder mehrere Kanäle aufweisen, über die das Transportgas TL in einem Winkel zwischen 0 und 89 Grad in die Pulverleitung 9 eingeleitet wird. Das durch diese Kanäle strömende Transportgas TL erzeugt eher einen Unterdruck in der Pulverleitung 40.

Mittels der Steuer- und Auswerteeinheit 15 sind sämtliche Ventile 61 bis 66, 68 und 71 bis 76 steuerbar. Bei Bedarf können mit der Steuerung 15 auch die Ventile 121 und 122 angesteuert werden. In Figur 8 sind bei der Steuerung 15 beispielhaft der Steueranschluss für das Pulverauslassventil 4 und der Signaleingang für das Messsignal S2 gezeigt. Die Steuer- und Auswerteinheit 15 kann sowohl zum Steuern als auch zum Regeln benutzt werden. Sie kann mechanische und elektronische Komponenten umfassen. Sie kann insbesondere eine mikrocontroller- oder mikroprozessorbasierte Recheneinheit umfassen.

Vorzugsweise weist die Steuerung 15 einen Speicher auf, in dem Standardwerte zum Beispiel für die Länge von bestimmten Schläuchen (Pulverleitungen), Druckwerte und/oder Korrekturwerte abgelegt sind. Die Standard-Korrekturwerte können beispielsweise auf andere Sprühapplikatoren übertragen werden.

Die Pulverbeschichtungsanlage kann, wie in Figur 4 gezeigt, zusätzlich zur Pulverfördereinrichtung 100 und der Beschichtungskabine 56 auch noch einen Zyklon 57 zur Rückgewinnung des Pulvers und ein Nachfilter 58 aufweisen.

Um das Overspray aus der Beschichtungskabine 56 zu entfernen, wird es zusammen mit der in der Beschichtungskabine 56 befindlichen Luft als Pulver-Luftgemisch aus der Kabine gesaugt und dem Zyklon 57 zugeführt, der als Monozyklon ausgebildet sein kann. Das Pulver-Luftgemisch strömt oben tangential in den Zyklon 57 und im Zyklon spiralförmig nach unten. Durch die bei der Rotation des Pulver-Luftstroms entstehende Zentrifugalkraft werden die Pulverpartikel nach aussen an die Aussenwand des Zyklons gedrückt. Anschliessend werden die Pulverpartikel nach unten in Richtung des Pulverauslasses des Zyklons gefördert und dort gesammelt. Die von den Pulverpartikeln befreite Luft wird über ein im Zyklon befindliches Zentralrohr abgesaugt. Der so gereinigte Luftstrom kann noch dem Nachfilter 58 zugeführt werden, um auch noch das in der Luft verbliebene restliche Pulver herauszufiltern. Wenn das Ventil 121 geöffnet ist, kann das rezyklierte Pulver RP aus dem Zyklon 57 entnommen und über eine Pumpe 123 und eine Leitung 141 wieder der Pulverfördervorrichtung 100 zugeführt werden. Wenn das Ventil 122 geöffnet ist, kann das im Zyklon herausgefilterte Pulver statt dessen auch über die Leitungen 95 und 94 dem Nachfilter 58 zugeführt werden.

Der Nachfilter 58 kann mit Filterpatronen ausgestattet sein, die die restlichen in der Luft verbliebenen Pulverpartikel herausfiltern. Ein vorzugsweise elektrisch angetriebener Ventilator oder ein Gebläse sorgt für den notwendigen Luftdurchsatz.

Wenn kein Zyklon verwendet wird, kann auch das Pulver aus dem Nachfilter 58 entnommen und über die Pumpe 123 und die Leitung 141 wieder der Pulverfördereinrichtung 100 zugeführt werden.

Auch die in den Figuren 4 und 8 dargestellte Beschichtungsvorrichtung können das in den Figuren 5 und 6 beschriebene Messverfahren nutzen.

Bei der in Figur 7 dargestellten Beschichtungsvorrichtung ist das Absperrelement 4 als Schlauchquetsche ausgebildet. Auch das Ventil 41 ist als Schlauchquetsche ausgebildet. Dies ist aber nicht zwingend.

Der Injektor 25 weist eine Treibdüse 25.1 und eine Fangdüse 25.2 auf. Der Pulvereinlass 1.1 des Injektors 25 ist über die Pulverleitung 8, 7 mit dem Pulvervorratsbehälter 6 verbunden. Der Pulverauslass 1.2 des Injektors 25 ist mit der Pulverleitung 9 verbunden. Der Injektor 25 weist zudem einen Fördergasanschluss 25.3 auf, über den Fördergas FL zur Treibdüse 25.1 geleitet wird. Zusätzlich zum Förderluftanschluss 25.3 ist am Injektor 25 ein Dosiergasanschluss 25.4 vorgesehen, über den Dosiergas DL in einen ringförmigen Dosiergaskanal 25.5 geleitet wird, welcher durch die Mantelfläche der Fangdüse 25.2 und das Gehäuse des Injektors 25 gebildet wird.

Die Treibdüse 25.1 weist einen Fördergaseinlass und an ihrem stromabwärtigen Ende einen Treibdüsenauslass auf. Das Fördergas FL wird vom Fördergasanschluss 25.3 kommend durch den Fördergaseinlass und die Treibdüse 25.1 hindurch geleitet und strömt dann aus dem Treibdüsenauslass in Richtung Fangdüse 25.2. Während das Fördergas FL zur Fangdüse 25.2 strömt, erzeugt es im Ansaugkanal 25.6 einen Unterdruck und nimmt über den Ansaugkanal 25.6 Pulver 20 auf. Dadurch wird das Pulver 20 aus dem Pulvervorratsbehälter 6 in den Injektor 25 gesaugt.

Die Fangdüse 25.2 weist an ihrem stromaufwärtigen Ende eine Mündung mit einem definierten Radius auf. An die Mündung schliesst sich ein stromaufwärtiger Kanalabschnitt an, der als Mischrohr dient. Daran wiederum schliesst sich ein konischer, sich in stromabwärtiger Richtung aufweitender Kanalabschnitt an, der als Diffusor ausgebildet ist. Die Fangdüse 25.2 ist zum Teil im Gehäuse des Injektors 25 angeordnet und wird über eine Leithülse 25.7 und eine Überwurfmutter mit dem Gehäuse des Injektors verspannt.

Das Dosiergas DL strömt durch den Dosiergaseinlass 25.4, den Dosiergaskanal 25.5 und dem stromabwärtigen Dosiergasauslass in die Pulverleitung 9. Der Dosiergasauslass befindet sich zwischen der Mantelfläche der Fangdüse 25.2 und der Innenseite einer Leithülse 25.7. In der Pulverleitung 9 vermischt sich das Dosiergas DL mit aus dem Auslass der Fangdüse 25.2 strömenden Pulver-Fördergas-Gemisch.

Im Folgenden wird ein alternatives Verfahren zur Ermittlung des Offsetdruckwerts $p_{off}$ beschrieben.

Vorab sei angemerkt, dass im Folgenden die Summe aus Fördergas FL und Dosiergas DL den Gasgesamtvolumenstrom bildet. Um den Offsetdruckwert $p_{off}$ zu bestimmen, wird zunächst der Anteil des Fördergas-Volumenstroms am Gesamtvolumenstrom auf 0 % und der Anteil des Dosiergas-Volumenstroms am Gesamtvolumenstrom auf 100% gesetzt. In dieser Konstellation strömt das Gas nicht nur in die Pulverleitung 9, 10, sondern zum Teil auch in den Pulvervorratsbehälter 6, da bei 0% Fördergas durch das Dosiergas praktisch kein Ansaugunterdruck erzeugt wird. In einem nächsten Schritt wird der Anteil an Fördergas FL schrittweise erhöht und der Anteil an Dosiergas DL entsprechend reduziert (wobei der Gasgesamtvolumenstrom konstant gehalten wird). Dabei erzeugt das Fördergas FL allmählich einen Unterdruck in der Ansaugleitung 25.6 des Injektors 25 und die Gasmenge, welche in den Pulvervorratsbehälter 6 strömt, nimmt ab. Ab einer gewissen Fördergasmenge halten sich die Gasmengen in der Waage, die Summe aus Förder- und Dosiergas strömt zu 100 % in die Pulverleitung 9, 10. Über die Ansaugleitung 25.6 wird weder Pulver aus dem Pulvervorratsbehälter 6 angesaugt noch Gas in den Pulvervorratsbehälter 6 geblasen. Um diesen Zustand zu finden, wird in einem nächsten Schritt der Anteil an Fördergas FL um eine weitere Einheit erhöht. Sobald der Pulversensor 19 einen Pulverfluss detektiert (d.h. nun wird etwas Pulver über die Ansaugleitung 25.6 angesaugt), wird der Anteil an Fördergas FL wieder um eine Einheit reduziert. Anschliessend ermittelt die Steuerung 15 anhand des soeben vom Drucksensor 2 erfassten Drucks den Offsetdruck $p_{off}$.

Dieses Verfahren zur Ermittlung des Offsetdrucks $p_{off}$ hat den Vorteil, dass es ohne das Absperrelement 4 auskommt. Allerdings benötigt dieses Verfahren für die Ermittlung des Offsetdrucks $p_{off}$ in der Regel mehr Zeit als das oben beschriebene Verfahren.

Aufbau des Drucksensors 2

Prinzipiell kann der Drucksensor 2 zum Beispiel wie in Figur 10 gezeigt aufgebaut sein. In der Pulverleitung 9, 10 ist eine Sensorkupplung 33 mit einem Pulvereinlass 33.1 und einem Pulverauslass 33.3 angeordnet. Die Sensorkopplung 33 umfasst zudem einen Sensoranschluss 33.2, an den eine Drucksensorleitung 32 angeschlossen ist. Über die Drucksensorleitung 32 kann Druckgas, das von einer Druckgasquelle 29 stammt, mit einem Druck p2 durch eine Öffnung 9.2 in die Pulverleitung 9, 10 eingespeist werden. Der Druck p2 ist dabei so gewählt, dass er grösser ist als jener Druck, der am Leitungsende 9.1 in der Leitung 9 herrscht. Damit wird sichergestellt, dass kein oder nur wenig Pulver aus der Leitung 9, 10 in die Drucksensorleitungen 32 und zum Druckwandler 27 gelangt. Falls dies aber trotzdem passiert, kann das Ventil 24, das als Spülventil fungiert, geöffnet werden. Dann strömt das von der Druckgasquelle 29 stammende Druckgas über die Drucksensorleitung 32 in die Pulverleitung 9, 10 und transportiert so das eventuell in der Drucksensorleitung 32 vorhandene Pulver heraus. Falls die Drucksensorleitung 32 nicht gespült werden soll, ist das Ventil 24 geschlossen. Wenn das Ventil 23 geöffnet ist, strömt das von der Druckgasquelle 29 stammende Druckgas über eine Blende 28 in die Drucksensorleitung 32 und von dort in die Pulverleitung 9, 10. Die Blende 28 dient dazu den Druckgas-Volumenstrom V, der über die Öffnung 9.2 in die Pulverleitung 10 strömt, konstant zu halten. Die Blende 28 ist vorzugsweise so gewählt, dass der Druckgas-Volumenstrom $\dot{V}$ klein ist, sodass nur wenig Druckgas in die Pulverleitung 10 gelangt. Der Drucksensor 2 kann ein weiteres Ventil 22 aufweisen, das - wenn es geöffnet ist - dafür sorgt, dass das Druckgas zum Druckwandler 27 gelangt. Das Ventil 22 kann bei Bedarf auch dazu genutzt werden, um den Druckwandler 27 zu schützen, wenn eine Spülung der Pulverleitung 9, 10 mit Druckgas vorgenommen wird. Auf diese Weise erfasst der Druckwandler 27 den Druck, der am Leitungsende 10.1 herrscht.

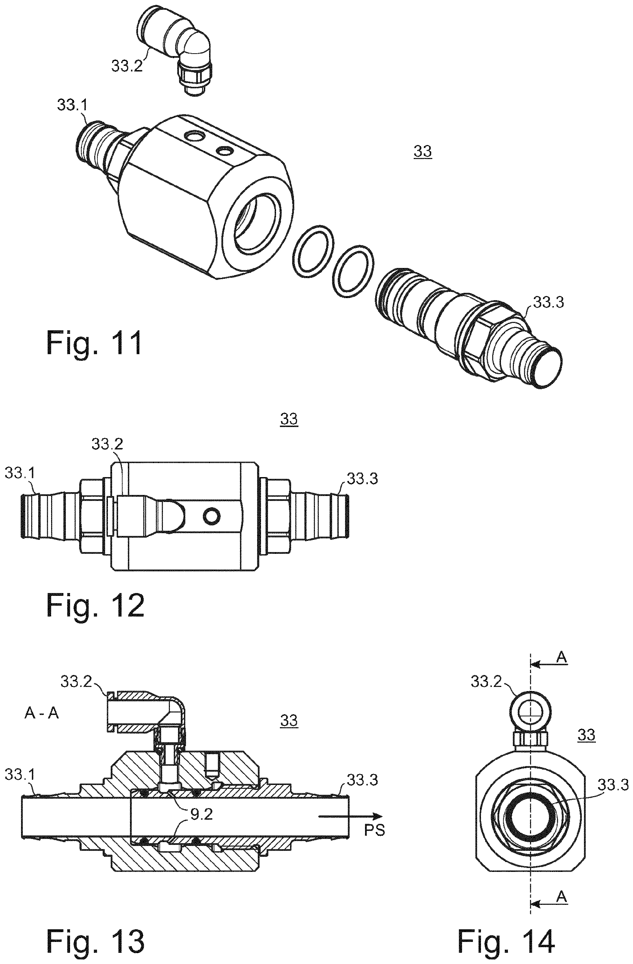

Figur 11 zeigt eine mögliche Ausführungsform der Sensorkupplung 33 in einer Explosionsansicht. In Figur 12 ist die Sensorkupplung 33 in der Draufsicht, in Figur 13 in der Seitenansicht im Schnitt und in Figur 14 von vorne dargestellt. Wie in Figur 13 zu erkennen ist können in der Sensorkupplung 33 mehrere, vorzugsweise zwei Öffnungen 9.2 vorgesehen sein. Die Öffnungen 9.2 sind vorzugsweise schräg angeordnet und zwar so, dass das durch sie in die Pulverleitung 9, 10 einströmende Gas in einem flachen Winkel auf den Pulverstrom PS trifft. Dies ist strömungstechnisch besser und hat den Vorteil, dass beim Spülen der Pulverleitung 9, 10 weniger Pulver in die Drucksensorleitung 32 gelangt. Vorzugsweise hat die Öffnung 9.2 beziehungsweise haben die Öffnungen 9.2 einen in Bezug auf die Pulverleitung 9, 10 kleinen Durchmesser, zum Beispiel 0,7 mm. Auch dadurch gelangt sowohl im Betrieb als auch beim Spülen weniger Pulver in die Drucksensorleitung 32.

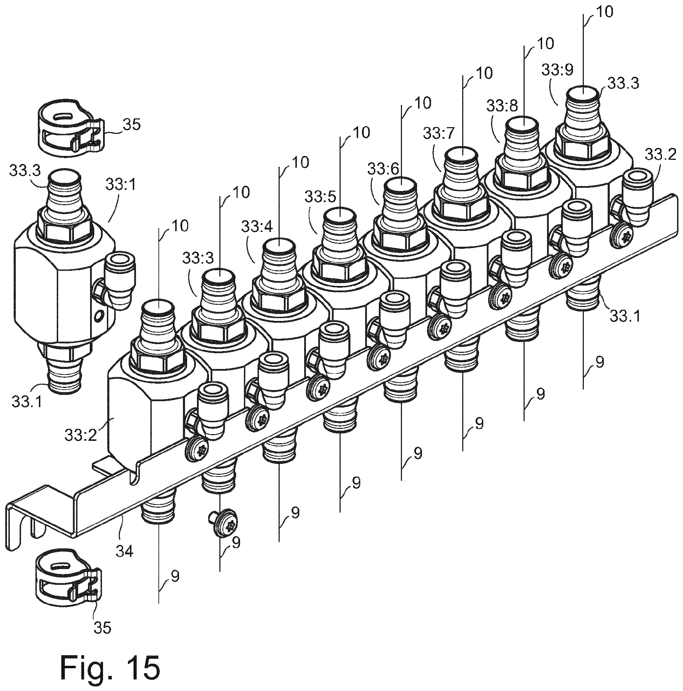

Die Fördervorrichtung 100 (siehe Fig. 4 und 8) kann mit mehreren Pulverauslassventilen 4 und entsprechend vielen Pulverleitungen 9, 10 ausgestattet sein, über die jeweils separat Pulver aus dem Arbeitsbehälter 51 herausgefördert werden kann. Falls zum Beispiel n Ventile 4 und n Pulverleitungen 9, 10 vorgesehen sind, ist vorzugsweise für jede der n Pulverleitungen 9, 10 jeweils ein separater Drucksensor 2 vorgesehen. Jeder der n Drucksensoren 2 ist dann über eine eigene Sensorkupplung 33 mit der entsprechenden Pulverleitung 9, 10 verbunden. Beispielhaft ist in Figur 15 eine Baugruppe mit einer Schiene 34 und neun Sensorkupplungen 33:1 - 33:9 gezeigt, die auf der Schiene 34 aufgereiht sind. Mit Hilfe eines Clips 35, der Schlauchschelle dient, ist jeweils eine der Pulverleitungen 9, 10 an der Sensorkupplung 33 befestigt. An jeden der neun Sensoranschlüsse 33.2 ist jeweils ein Drucksensor 2 (in Fig. 15 nicht gezeigt) angeschlossen, der jeweils sein Sensorsignal S an die Steuerung 15 übermittelt. Damit kann die Steuerung 15 für jede der neun Pulverleitungen 9, 10 jeweils separat den augenblicklich durch sie strömenden Beschichtungspulver-Massenstrom $\dot{m}$ ermitteln.

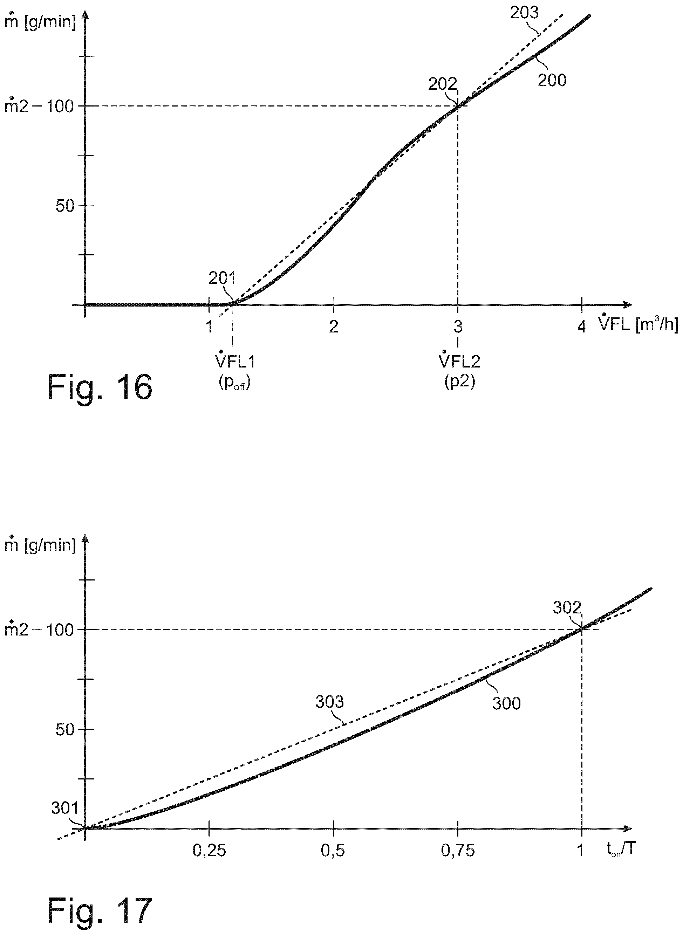

Figur 16 zeigt beispielhaft den Kurvenverlauf 200 des Beschichtungspulver-Massenstroms $\dot{m}$ in Abhängigkeit vom Fördergas-Volumenstrom $\dot{V}FL$ für die Beschichtungsvorrichtung gemäss Figur 1, 2 oder 3, wobei sich der gesamte Druckgas-Volumenstrom $\dot{V}$ in der Pulverleitung aus der Summe von Fördergasvolumenstrom $\dot{V}FL$ und Dosiergasvolumenstrom $\dot{V}DL$ ergibt. Wie aus dem Kurvenverlauf 200 zu erkennen ist, stellt sich bei einem Fördergas-Volumenstrom $\dot{V}FL$, der kleiner als $\dot{V}FL1$ ist, kein Beschichtungspulver-Massenstrom ein. Erst wenn der Fördergas-Volumenstrom grösser als $\dot{V}FL1$ ist, beginnt Pulver in der Pulverleitung 9, 10 zu fliessen. Mit Hilfe des Pulversensors 19 kann die Grenze 201 ermittelt werden, an der gerade noch kein Pulver fliesst oder das Pulver gerade eben zu fliessen beginnt. Damit kann auch der an diesem Grenzübergang 201 fliessende Fördergas-Volumenstrom $\dot{V}FL1$ ermittelt werden. Wird der Fördergas-Volumenstrom $\dot{V}FL$ erhöht, steigt auch der Beschichtungspulver-Massenstrom $\dot{m}$. Weil durch das

Auslitern (siehe Kalibriervorgang) sowohl die Zeitdauer $\Delta$t als auch die während dieser Zeitdauer transportierte Pulvermasse m bekannt ist, kann der Beschichtungspulver-Massenstrom $\dot{m}2$ berechnet werden. Der während des Ausliterns eingestellte Fördergas-Volumenstrom $\dot{V}FL2$ ist ebenfalls bekannt. Somit kann man aus den Punkten 201 und 202 die Lage und die Steigung der Geraden 203 berechnen. Die Gerade 203 kann als realistische Näherung an den tatsächlichen Kurvenverlauf 200 dienen und kann dazu benutzt werden, den zu einem bestimmten Fördergas-Volumenstrom $\dot{V}FL$ gehörenden Beschichtungspulver-Massenstrom $\dot{m}$ zu bestimmen.

Mit dem Drucksensor 2 kann der Druck gemessen werden, der in der Leitung 9, 10 herrscht, wenn der Pulversensor 19 angibt, dass man sich an diese Grenze 201 befindet. Dieser Druck p entspricht dem Offset-Druckwert $p_{off}$.

Bei der Beschichtungsvorrichtung gemäss Figur 4 und 8 wird über die Öffnungsdauer des Absperrelements (Auslassventil) 4, die Höhe des Beschichtungspulver-Massenstroms $\dot{m}$ eingestellt. Figur 17 zeigt beispielhaft den Kurvenverlauf 300 des Beschichtungspulver-Massenstroms $\dot{m}$ in Abhängigkeit von der Öffnungsdauer $T_{on}/T$ des Auslassventils 4. Wie aus dem Kurvenverlauf 300 zu entnehmen ist, beginnt das Pulver bereits bei einer minimalen Öffnungsdauer $t_{on}/T$ (Punkt 301) in der Pulverleitung 9, 10 zu strömen. Weil durch das Auslitern (siehe Kalibriervorgang) sowohl die Zeitdauer $\Delta$t als auch die während dieser Zeitdauer transportierte Pulvermasse m und die dazugehörige Öffnungsdauer $t_{on}/T$ (= 1) bekannt ist, kann eine Gerade 303 berechnet werden, die durch die Punkte 301 und 302 geht und den realen Verlauf der Kurve 300 gut angenähert wiedergibt.

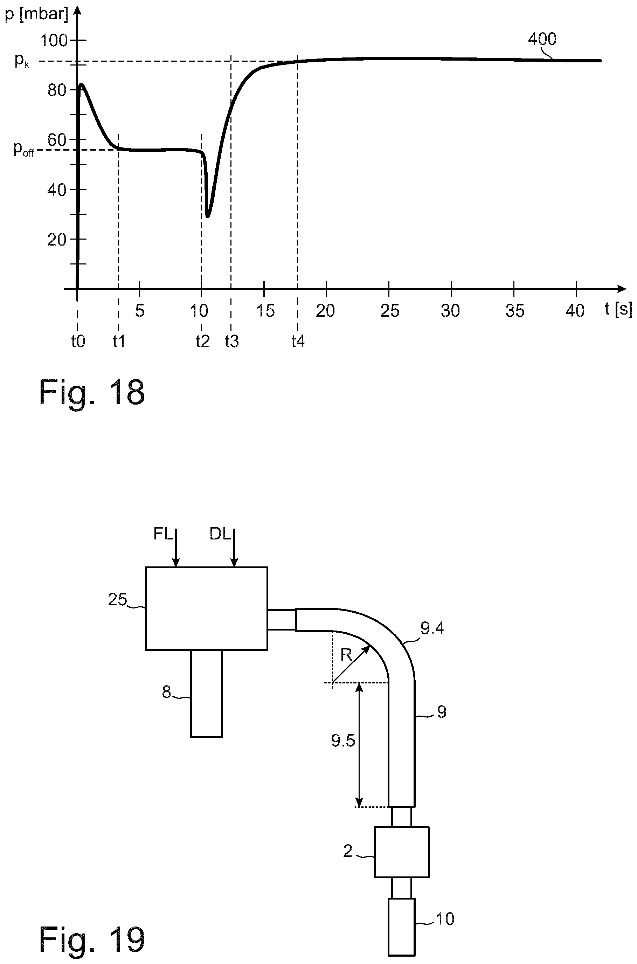

Figur 18 zeigt beispielhaft den Kurvenverlauf 400 eines Drucksignals S in der Pulverleitung 9, 10 in Abhängigkeit von der Zeit t bei verschiedenen Ereignissen. Wenn der Sprühapplikator 3 nicht oder wenig bewegt wird, erzeugt der Drucksensor 2 ein relativ konstantes Drucksignal S. Im Kurvenverlauf 400 ist dies rechts vom Zeitpunkt t4 zu sehen. Wenn der Sprühapplikator 3 hingegen bewegt wird, ist dem Grundsignal eine sinusartige Welle überlagert. Je mehr Pulver gefördert wird, desto mehr Pulver lagert sich an den Wänden des Pulverleitung 9, 10 ab. Wird eine gewisse Fördermenge überschritten, kann sich beim Beschichten plötzlich ein Teil des Pulvers von den Wänden ablösen, der dann in einem Schwall zum Sprühapplikator 3 transportiert wird (sogenannte Dünenförderung innerhalb des Schlauchs). Dies wiederum kann zu unerwünschten Spuckern in der vom Sprühapplikator 3 erzeugten Pulverwolke führen, was in der Regel die Qualität der Beschichtung reduziert. Ein solches Ereignis spiegelt sich im Sensorsignal S wieder und kann mit der Steuer- und Auswerteeinheit 15 detektiert werden. Wenn die Steuerung 15 im Sensorsignal S ein solches Ereignis detektiert hat, kann sie eine entsprechende Information an das Bedienpersonal ausgeben oder die Betriebsparameter automatisch anpassen.

Aus dem Verlauf des Sensorsignals S kann auch der Verschmutzungsgrad der Pulverleitung 9, 10 bestimmt werden. Wenn die Pulverleitung 9, 10 lediglich mit Druckgas beaufschlagt wird (die Pulverzufuhr in der Pulverleitung 8 ist unterbunden), erreicht der Druck zum Zeitpunkt t0 einen Spitzenwert, sinkt dann ab und erreicht zum Zeitpunkt t1 (nach ca. 3 s) ein stabiles Niveau. Dieser Drucksignalverlauf deutet darauf hin, dass die Pulverleitung 9, 10 allmählich vom Pulver befreit wird. Nachdem das Drucksignal nach t1 einen konstanten Wert $p_{off}$ angenommen hat (Abschnitt t1 bis t2), ist davon auszugehen, dass das Pulver aus der Pulverleitung 9, 10 ausgeblasen wurde. In der anschliessenden Beschichtungsphase, die ab dem Zeitpunkt t3 = 12 s beginnt, wird zum Zeitpunkt t4 ein konstanter Zustand erreicht. Je länger die Pulverleitung 9, 10 ist, desto länger dauert der Signalanstieg (zwischen t3 und t4). Aus dem Sensorsignal S kann die Steuer- und Auswerteeinheit 15 also zum Beispiel auch die Länge der Pulverleitung 9, 10 ermitteln.

Um die Bestimmung des Druckoffsetwerts Poff noch genauer durchführen zu können, ist es hilfreich, die Messung dann durchzuführen, wenn die Pulverleitung 9, 10 einen gewissen Pulverrest aufweist.

Die Pulverleitung 9, 10 kann beispielsweise ein Pulverschlauch sein.

Auch die Länge der Pulverleitung 9 sowie deren Art der Verlegung kann eine Rolle spielen (Figur 19). Die Anzahl und Form der Biegungen und deren Radien R haben in der Regel zwar keinen Einfluss auf den Offsetdruck $p_{off}$, auf den tatsächlichen Differenzdruck können sie sich aber durchaus auswirken. Der Grund dafür ist, dass die Pulverpartikel bei jeder Biegung mit der Schlauchwand kollidieren und zunächst an Geschwindigkeit verlieren. Anschliessend werden die Partikel durch den Gasstrom aber wieder beschleunigt. Die dazu nötige Energie verursacht einen Anstieg des Staudrucks, welcher bei der Ermittlung des Offsetdrucks $p_{off}$ nicht berücksichtigt wurde. Bei der vorgängig gemachten Definition wird dieser Faktor kleiner, je mehr Biegungen vorhanden sind.

In der Regel ist es vorteilhaft, die Radien R der Schlauchbiegungen möglichst gross zu wählen und Knicke zu vermeiden. Zudem ist es von Vorteil, in der Pulverleitung 9, 10 eine Beruhigungsstrecke 9.5 vorzusehen.

Es kann vorgesehen sein, dass zum Beispiel bei der Inbetriebnahme der Beschichtungsanlage der Steuerung 15 zusätzliche Parameter über die Pulverleitung 9, 10 beziehungsweise die Pulverleitungen übergegeben werden. So kann der Steuerung 15 für jeden Sprühapplikator 3 die Länge des Pulverschlauches 9, 10 und zum Beispiel auch die Anzahl der Bögen und deren Radien R übergeben werden. Auch die mittlere Höhe, auf der die Pulverleitung 9, 10 angeordnet ist kann der Steuerung 15 übergeben werden. Mit solchen zusätzlichen Angaben kann dann die Steuerung 15 dann zum Beispiel einen Verlegungsfaktor VF berechnen.

Die oben beschriebenen Verfahren sind nicht auf die oben beschriebenen Fördervorrichtungen und Beschichtungsvorrichtungen beschränkt. So können die oben beschriebenen Verfahren zum Beispiel auch bei den in den Druckschriften DE 10 2017 103 316 A1, DE 10 2018 133 713 A1, WO 2009/037540 A2, DE 10 2005 006 522 B3, EP 2 77 821 A1, WO 2003/024612 A1, DE 102 47 829 A1, WO 2005/051549 A1, EP 3 238 832 A1, DE 103 00 280 A1, DE 103 53 968 A1, WO 2014/161718 A1 und WO 2014/202342 A1 beschrieben Fördervorrichtungen zur Messung des Pulvermassenstroms verwendet werden. Die oben beschriebenen Messvorrichtungen können ebenfalls bei den soeben erwähnten Fördervorrichtungen eingesetzt werden. Sinngemäss das Gleiche gilt für die Pfropfenförderanlagen PP25 und PP40 der J. Wagner GmbH, 88677 Markdorf, die in deren Betriebsanleitung, Ausgabe 11/2020, Bestellnummer DOC2368103 beschrieben sind.

Die vorhergehende Beschreibung der Ausführungsbeispiele gemäss der vorliegenden Erfindung dient nur zu illustrativen Zwecken. Im Rahmen der Erfindung sind verschiedene Änderungen und Modifikationen an der Messvorrichtung und der Fördervorrichtung möglich. So sind beispielsweise die verschiedenen in den Figuren 1 bis 4, 7 bis 15 und 19 gezeigten Komponenten der Beschichtungsvorrichtungen auch auf eine andere als in den Figuren gezeigte Weise miteinander kombinierbar.

Bezugszeichenliste

1    Pulverförderer
1.1    Pulvereinlass des Förderers
1.2    Pulverauslass des Förderers
2    Drucksensor
3    Sprühapplikator
4    Absperrelement
6    Pulvervorratsbehälter
7    Pulverversorgungsleitung
8    Pulverleitung
9    Pulverleitung
9.1    stromabwärtiges Ende der Pulverleitung
9.2    Öffnung
9.4    Biegung
9.5    Beruhigungsstrecke
10    Pulverleitung
10.1    erstes Ende der Pulverleitung
10.2    zweites Ende der Pulverleitung
11    Absperrelement / Ventil
13    Druckgasquelle
14    Absperrelement / Ventil

| 15 | Steuer- und Auswerteeinheit |
|---|---|
| 16 | Einstelleinrichtung |
| 17 | Bedienpanel / Anzeige |
| 18 | steuerbare Druckgasquelle |
| 19 | Pulversensor |
| 20 | Beschichtungspulver |
| 21 | Trennwand |
| 22 | Ventil |
| 23 | Ventil |
| 24 | Ventil |
| 25 | Injektor |
| 25.1 | Treibdüse |
| 25.2 | Fangdüse |
| 25.3 | Fördergasanschluss |
| 25.4 | Dosiergasanschluss |
| 25.5 | Dosiergaskanal |
| 25.6 | Ansaugkanal |
| 25.7 | Leithülse |
| 26 | Druckregler |
| 27 | Druckwandler |
| 28 | Blende |
| 29 | Druckgasquelle |
| 30 | Druckregelventil |
| 31 | Druckregelventil |
| 32 | Drucksensorleitung |
| 33 | Sensorkupplung |
| 33.1 | Pulvereinlass |
| 33.2 | Sensoranschluss |
| 33.3 | Pulverauslass |
| 33:1 - 33:9 | erste bis neunte Sensorkupplung |
| 34 | Schiene |
| 40 | Druckgasquelle |
| 41 | Absperrelement |
| 45 | Druckgasquelle |
| 46 | Absperrelement / Ventil |
| 51 | Arbeitsbehälter |
| 51.2 | Entlüftungsanschluss |
| 51.3 | Reinigungsanschluss |
| 52 | Zwischenbehälter |
| 52.1 | Anschluss am Zwischenbehälter |
| 52.2 | Pulverauslass des Zwischenbehälters |
| 55 | Sprühapplikator |
| 56 | Beschichtungskabine |
| 57 | Zyklonabscheider |
| 58 | Nachfilter |
| 59 | Ultraschallsieb |
| 61 | Ventil |
| 62 | Entlüftungsventil |
| 64 | Ventil |
| 65 | Ventil |
| 66 | Ventil |
| 67 | Einlass für Transportgas |
| 69 | Fluidisiereinrichtung |
| 70 | Rüttelvorrichtung |
| 71 | Ventil für Frischpulver |
| 72 | Ventil |
| 73 | Ventil |
| 74 | Ventil |

75 Vakuum-Ventil oder Unterdruckerzeuger

76 Ventil

77 Ventil für Frischpulver

78.1 Drucksensor

79 Sensor

80 Vorratsbehälter

81 Pumpe

84 Druckregelventil

90 Leitung

91 Leitung

92 Leitung

93 Leitung

94 Leitung

95 Leitung

96 Leitung

97 Leitung

98 Pulvereinlass

99.1 - 99.n Pulverauslässe

100 Pulverfördervorrichtung

103 Mundstück

110 Werkstück

121 Ventil

122 Ventil

123 Pumpe

132 Transportgaskanal

133 Schlauchnippel

194 Ringspalt

196 Auslasskörper

196.2 Pulverkanal

200 Pulverförderkurve

201 Förderbeginn

202 Kalibierpunkt

203 Gerade

211 Messelektrode

213 Sensoranschluss / Messsignalanschluss

214 Hülse

215 Sensorelektronik

240 elektrischer Anschluss

250 Druckluft-Steueranschluss für das Ventil 4

300 Pulverförderkurve

301 Kalibierpunkt

302 Kalibierpunkt

303 Gerade

400 Pulverförderkurve

501 - 510 Schritte

601 - 604 Schritte

DL Dosiergas

DRL Druckgas

FL Fördergas

FdL Fluidisiergas

FP Frischpulver

k Korrekturwert

m Pulvermasse

m Beschichtungspulver-Massenstrom

P Partikel

PS Pulverstrom

p Druck

$p_k$     Druckwert für die Kalibrierung

$p_{off}$     Offsetdruck

RP     rezykliertes Pulver

S     Sensorsignal

S2     Sensorsignal

SL     Spülgas

t0     Zeitpunkt

t1     Zeitpunkt

t2     Zeitpunkt

t3     Zeitpunkt

t4     Zeitpunkt

TL     Transportgas

t     Zeit

ton     Einschaltdauer

T     Periodendauer

$\Delta t$     Zeitdauer

$\dot{V}$     Druckgas-Volumenstrom

$\dot{V}_1$     Druckgas-Volumenstrom

$\dot{V}_2$     Druckgas-Volumenstrom

$\alpha$     Winkel

**Patentansprüche**

1. Messvorrichtung zum Messen eines mit Druckgas erzeugbaren Beschichtungspulver-Massenstroms in einer Pulverleitung,

    - mit einer Steuer- und Auswerteeinheit (15), die derart ausgebildet und betreibbar ist, dass sie zwischen einem Offset-Modus und einem Betriebsmodus wechseln kann,
    - bei der die Steuer- und Auswerteeinheit (15) im Offset-Modus dafür sorgt,

      -- dass eine Einstelleinrichtung (16) die Pulverleitung (9, 10) mit Druckgas (DRL) beaufschlagt und den Beschichtungspulverfluss in der Pulverleitung (9, 10) unterbindet,
      -- sodann ein Drucksensor (2) den Druck in der Pulverleitung (9, 10) erfasst und
      -- die Steuer- und Auswerteeinheit (15) den erfassten Druck als Offset-Druckwert ($p_{off}$) interpretiert, und

    - bei der die Steuer- und Auswerteeinheit (15) im Betriebsmodus dafür sorgt,

      -- dass die Einstelleinrichtung (16) den Beschichtungspulverfluss in der Pulverleitung (9, 10) freigibt, und
      -- sodann anhand des vom Drucksensor (2) in der Pulverleitung (9, 10) erfassten Drucks (p), des Offset-Druckwerts ($p_{off}$) und eines Korrekturwerts (k) den durch die Pulverleitung (9, 10) strömenden Beschichtungspulver-Massenstrom ($\dot{m}$) ermittelt.

2. Messvorrichtung nach Anspruch 1,
bei der die Einstelleinrichtung (16) eine steuerbare Druckgasquelle (18) umfasst.

3. Messvorrichtung nach Anspruch 1 oder 2,
bei der die Einstelleinrichtung (16) ein Absperrelement (4) umfasst.

4. Messvorrichtung nach Anspruch 1,
bei der die Steuer- und Auswerteeinheit (15) derart ausgebildet und betreibbar ist, dass sie wiederholt in den Offset-Modus wechselt und den Offset-Druckwert ($P_{off}$) erneut ermittelt.

5. Messvorrichtung nach Anspruch 1,

bei der die Steuer- und Auswerteeinheit (15) derart ausgebildet und betreibbar ist, dass sie den Beschichtungspulver-Massenstrom ($\dot{m}$) erneut ermittelt.

6. Messvorrichtung nach einem der Ansprüche 1 bis 5, bei der die Steuer- und Auswerteeinheit (15), derart ausgebildet und betreibbar ist, dass sie in einen Kalibriermodus wechseln kann, und im Kalibriermodus dafür sorgt, dass

   - die Einstelleinrichtung (16) den Beschichtungspulverfluss in der Pulverleitung (9, 10) für eine bestimmte Zeitdauer ($\Delta t$) freigibt,
   - sodann der Drucksensor (2) währenddessen den Druck in der Pulverleitung (9, 10) erfasst, und
   - die Steuer- und Auswerteeinheit (15) den erfassten Druck als Druckwert ($p_k$) interpretiert, und
   - die Steuer- und Auswerteeinheit (15) anhand der während dieser Zeitdauer ($\Delta t$) durch die Pulverleitung (9, 10) geströmten Beschichtungspulvermasse (m) und der beiden Druckwerte ($p_{off}$, $p_k$) den Korrekturwert (k) ermittelt.

7. Messvorrichtung nach Anspruch 6,
   bei der die Steuer- und Auswerteeinheit (15) derart ausgebildet und betreibbar ist, dass sie wiederholt in den Kalibriermodus wechselt und den Korrekturwert (k) erneut ermittelt.

8. Messvorrichtung nach Anspruch 6 oder 7,
   bei der die Steuer- und Auswerteeinheit (15) derart ausgebildet und betreibbar ist, dass sie, wenn der erneut ermittelte Korrekturwert (k) vom bisherigen Korrekturwert abweicht, ihn anpasst und/oder die Abweichung signalisiert.

9. Messvorrichtung nach einem der Ansprüche 1 bis 8, mit einem Pulversensor (19), um zu detektieren, ob Beschichtungspulver durch die Pulverleitung (9, 10) strömt.

10. Messvorrichtung nach Anspruch 9,
    bei der der Pulversensor (19) in einem an die Pulverleitung (9, 10) angeschlossenen Sprühapplikator (3) angeordnet ist.

11. Messvorrichtung nach Anspruch 10,
    bei der der Pulversensor (19) als Influenzsensor oder als optischer Sensor ausgebildet ist.

12. Messvorrichtung nach einem der Ansprüche 1 bis 11, bei der die Steuer- und Auswerteeinheit (15) derart ausgebildet und betreibbar ist, dass sie aus mehreren der vom Drucksensor (2) erfassten Druckwerten (p) einen geglätteten Druckwert berechnet.

13. Fördervorrichtung für Beschichtungspulver mit einer Messvorrichtung nach einem der Ansprüche 1 bis 12,

    - mit einem mit Druckgas (DRL) betreibbaren Pulverförderer (1), der auslassseitig mit der Pulverleitung (9, 10) verbunden ist, und
    - bei der mit der Einstelleinrichtung (16) der Beschichtungspulverfluss in der Pulverleitung (9, 10) unterbindbar ist.

14. Fördervorrichtung nach Anspruch 13,
    bei der die Pulverleitung (9, 10) ausgangsseitig mit einem Sprühapplikator (3) verbunden ist.

15. Fördervorrichtung nach Anspruch 14,
    bei der die Druckgasquelle (18) ein Druckgas-Absperrelement (11; 14) aufweist.

16. Fördervorrichtung nach einem der Ansprüche 13 bis 15,
    bei der die Druckgasquelle (18) einen Volumenstromregler (30; 31) aufweist, der dazu vorgesehen ist, den dem Pulverförderer (1) zugeführten Druckgas-Volumenstrom ($\dot{V}$) auf einem vorgebbaren, konstanten Wert zu halten.

17. Fördervorrichtung nach einem der Ansprüche 13 bis 16,
    bei der der Pulverförderer (1) einen Injektor (25) aufweist.

18. Fördervorrichtung nach einem der Ansprüche 13 bis 15,

    - bei der der Pulverförderer (1) einen unter Druck setzbaren Arbeitsbehälter (51) mit einem Pulvereinlass (98) und einem Pulverauslass (99.1) aufweist, wobei der Pulverauslass (99.1) mit dem Absperrelement (4) verbunden ist, und
- bei der die Pulverleitung (9, 10) eingangsseitig einen Einlass für Transportgas (TL) aufweist.

**19.** Fördervorrichtung nach einem der Ansprüche 13 bis 18,
bei dem die Steuer- und Auswerteinheit (15) derart ausgebildet und betreibbar ist, dass sie die Druckgasquelle (18) so steuert, dass sich ein bestimmter Beschichtungspulver-Massenstrom ($\dot{m}$) einstellt.

**20.** Verfahren zum Messen des Beschichtungspulver-Massenstroms mit einer Messvorrichtung nach Anspruch 1, das folgende Schritte umfasst:

- die Steuer- und Auswerteinheit (15) wird in den Offset-Modus gebracht,
- mittels der Einstelleinrichtung (16) wird die Pulverleitung (9, 10) mit Druckgas (DRL) beaufschlagt und der Beschichtungspulverfluss in der Pulverleitung (9, 10) unterbunden,
- mit dem Drucksensor (2) wird der Druck in der Pulverleitung (9, 10) erfasst und als Offset-Druckwert ($p_{off}$) interpretiert,
- die Steuer- und Auswerteinheit (15) wird in den Betriebsmodus gebracht,
- mit Hilfe der Einstelleinrichtung (16) wird der Beschichtungspulverfluss in der Pulverleitung (9, 10) freigeben,
- mit dem Drucksensor (2) wird der Druck in der Pulverleitung (9, 10) erfasst, und
- mit Hilfe des erfassten Drucks, des Offset-Druckwerts ($p_{off}$) und des Korrekturwerts (k) wird von der Steuer- und Auswerteinheit (15) der durch die Pulverleitung (9, 10) strömende Beschichtungspulver-Massenstrom ($\dot{m}$) ermittelt.

**Claims**

**1.** A measuring device for measuring a coating powder mass flow rate that can be generated by means of compressed gas in a powder line,

- comprising a control and evaluation unit (15), which is formed and can be operated in such a way that it can change between an offset mode and an operating mode,
- in the case of which the control and evaluation unit (15) in the offset mode ensures

-- that a setting means (16) applies compressed gas (DRL) to the powder line (9, 10) and prevents the coating powder flow in the powder line (9, 10),
-- a pressure sensor (2) then detects the pressure in the powder line (9, 10) and
-- the control and evaluation unit (15) interprets the detected pressure as offset pressure value ($p_{off}$), and

- in the case of which the control and evaluation unit (15), in the operating mode, ensures

-- that the setting means (16) releases the coating powder flow in the powder line (9, 10), and
-- then determines the coating powder mass flow rate ($\dot{m}$) flowing through the powder line (9, 10) on the basis of the pressure (p) detected by the pressure sensor (2) in the powder line (9, 10), the offset pressure value ($p_{off}$) and a correction value (k).

**2.** The measuring device according to claim 1,
in the case of which the setting means (16) comprises a controllable compressed gas source (18).

**3.** The measuring device according to claim 1 or 2,
in the case of which the setting means (16) comprises a locking element (4).

**4.** The measuring device according to claim 1,
in the case of which the control and evaluation unit (15) is formed and can be operated in such a way that it repeatedly changes into the offset mode and determines the offset pressure value ($P_{off}$) anew.

**5.** The measuring device according to claim 1,
in the case of which the control and evaluation unit (15) is formed and can be operated in such a way that it determines the coating powder mass flow rate ($\dot{m}$) anew.

**6.** The measuring device according to any one of claims 1 to 5,
in the case of which the control and evaluation unit (15) is formed and can be operated in such a way that it can change into a calibrating mode, and in the calibrating mode ensures that

- the setting means (16) releases the coating powder flow in the powder line (9, 10) for a certain time period ($\Delta t$),
- the pressure sensor (2) then meanwhile detects the pressure in the powder line (9, 10), and
- the control and evaluation unit (15) interprets the detected pressure as pressure value ($p_k$), and
- the control and evaluation unit (15) determines the correction value (k) on the basis of the coating powder mass (m), which has flown through the powder line (9, 10) during this time period ($\Delta t$), and the two pressure values ($p_{off}$, $p_k$).

**7.** The measuring device according to claim 6,
in the case of which the control and evaluation unit (15) is formed and can be operated in such a way that it repeatedly changes into the calibrating mode and determines the correction value (k) anew.

**8.** The measuring device according to claim 6 or 7,
in the case of which the control and evaluation unit (15) is formed and can be operated in such a way that it, when the correction value (k) determined anew deviates from the previous correction value, adapts it and/or signals the deviation.

**9.** The measuring device according to any one of claims 1 to 8,
comprising a powder sensor (19), in order to detect whether coating powder flows through the powder line (9, 10).

**10.** The measuring device according to claim 9,
in the case of which the powder sensor (19) is arranged in a spray applicator (3), which is connected to the powder line (9, 10).

**11.** The measuring device according to claim 10,
in the case of which the powder sensor (19) is formed as influence sensor or as optical sensor.

**12.** The measuring device according to any one of claims 1 to 11,
in the case of which the control and evaluation unit (15) is formed and can be operated in such a way that it calculates a smoothed pressure value from several pressure values (p) detected by the pressure sensor (2).

**13.** A conveying device for coating powder comprising a measuring device according to any one of claims 1 to 12,

- comprising a powder conveyor (1), which can be operated with compressed gas (DRL) and which is connected to the powder line (9, 10) on the outlet side, and
- in the case of which the coating powder flow in the powder line (9, 10) can be prevented by means of the setting means (16).

**14.** The conveying device according to claim 13,
in the case of which the powder line (9, 10) is connected to a spray applicator (3) on the outlet side.

**15.** The conveying device according to claim 14,
in the case of which the compressed gas source (18) has a compressed gas locking element (11; 14).

**16.** The conveying device according to any one of claims 13 to 15,
in the case of which the compressed gas source (18) has a volume flow controller (30; 31), which is provided to keep the compressed gas volume flow ($\dot{V}$) supplied to the powder conveyor (1) at a predeterminable, constant value.

**17.** The conveying device according to any one of claims 13 to 16,
in the case of which the powder conveyor (1) has an injector (25).

**18.** The conveying device according to any one of claims 13 to 15,

- in the case of which the powder conveyor (1) has a working container (51), which can be pressurized, comprising a powder inlet (98) and a powder outlet (99.1),

wherein the powder outlet (99.1) is connected to the locking element (4), and
- in the case of which the powder line (9, 10) has an inlet for transport gas (TL) on the inlet side.

19. The conveying device according to any one of claims 13 to 18,
in the case of which the control and evaluation unit (15) is formed and can be operated in such a way that it controls the compressed gas source (18) so that a certain coating powder mass flow rate ($\dot{m}$) is reached.

20. A method for measuring the coating powder mass flow rate by means of a measuring device according to claim 1, which comprises the following steps:

- the control and evaluation unit (15) is brought into the offset mode,
- compressed gas (DRL) is applied to the powder line (9, 10) by means of the setting means (16) and the coating powder flow in the powder line (9, 10) is prevented,
- the pressure in the powder line (9, 10) is detected by means of the pressure sensor (2) and is interpreted as offset pressure value ($p_{off}$),
- the control and evaluation unit (15) is brought into the operating mode,
- the coating powder flow in the powder line (9, 10) is released with the help of the setting means (16),
- the pressure in the powder line (9, 10) is detected by means of the pressure sensor (2), and
- the control and evaluation unit (15) determines the coating powder mass flow rate ($\dot{m}$) flowing through the powder line (9, 10) with the help of the detected pressure, the offset pressure value ($p_{off}$) and the correction value (k).


**Revendications**

1. Dispositif de mesure permettant de mesurer un débit massique de poudre de revêtement pouvant être généré par du gaz comprimé dans une conduite de poudre,

- comprenant une unité de commande et d'évaluation (15) conçue et utilisable de façon à pouvoir passer d'un mode offset à un mode de fonctionnement,
- dans lequel l'unité de commande et d'évaluation (15) en mode offset assure

-- qu'un dispositif de réglage (16) alimente la conduite de poudre (9, 10) en gaz comprimé (DRL) et interrompt le flux de poudre de revêtement dans la conduite de poudre (9, 10),
-- qu'un capteur de pression (2) détecte ensuite la pression dans la conduite de poudre (9, 10) et
-- que l'unité de commande et d'évaluation (15) interprète la pression détectée comme une valeur de pression offset ($p_{off}$) et

- dans lequel l'unité de commande et d'évaluation (15) en mode de fonctionnement assure

-- que le dispositif de réglage (16) libère le flux de poudre de revêtement dans la conduite de poudre (9, 10), et
-- détermine ensuite, à l'aide de la pression (p) détectée par le capteur de pression (2) dans la conduite de poudre (9, 10), de la valeur de pression offset ($p_{off}$) et d'une valeur de correction (k), le débit massique de poudre de revêtement ($\dot{m}$) s'écoulant dans la conduite de poudre (9, 10).

2. Dispositif de mesure selon la revendication 1,
dans lequel le dispositif de réglage (16) comprend une source de gaz comprimé réglable (18).

3. Dispositif de mesure selon la revendication 1 ou 2, dans lequel le dispositif de réglage (16) comprend un élément de blocage (4).

4. Dispositif de mesure selon la revendication 1,
dans lequel l'unité de commande et d'évaluation (15) est conçue et utilisable de façon à passer de manière répétée en mode offset et à déterminer à nouveau la valeur de pression offset ($p_{off}$).

5. Dispositif de mesure selon la revendication 1,
dans lequel l'unité de commande et d'évaluation (15) est conçue et utilisable de façon à déterminer à nouveau le débit massique de poudre de revêtement ($\dot{m}$).

**6.** Dispositif de mesure selon l'une des revendications 1 à 5,
dans lequel l'unité de commande et d'évaluation (15) est conçue et utilisable de façon à passer dans un mode de calibrage et, dans le mode de calibrage, à assurer que

- le dispositif de réglage (16) libère le flux de poudre de revêtement dans la conduite de poudre (9, 10) pendant une durée déterminée ($\Delta t$),
- pendant ce temps, le capteur de pression (2) détecte ensuite la pression dans la conduite de poudre (9, 10), et
- l'unité de commande et d'évaluation (15) interprète la pression détectée comme valeur de pression (Pk), et
- l'unité de commande et d'évaluation (15) détermine la valeur de correction (k) à l'aide de la masse de poudre de revêtement (m) écoulée dans la conduite de poudre (9, 10) pendant cette durée ($\Delta t$), ainsi que des deux valeurs de pression ($p_{off}$, Pk).

**7.** Dispositif de mesure selon la revendication 6,
dans lequel l'unité de commande et d'évaluation (15) est conçue et utilisable de façon à passer de manière répétée dans le mode de calibrage et à déterminer à nouveau la valeur de correction (k).

**8.** Dispositif de mesure selon la revendication 6 ou 7, dans lequel l'unité de commande et d'évaluation (15) est conçue et utilisable de façon à ce que, lorsque la valeur de correction (k) à nouveau déterminée s'écarte de la valeur de correction précédente, elle l'adapte et/ou signale l'écart.

**9.** Dispositif de mesure selon l'une des revendications 1 à 8,
équipé d'un capteur de poudre (19) permettant de détecter si la poudre de revêtement s'écoule dans la conduite de poudre (9, 10).

**10.** Dispositif de mesure selon la revendication 9,
dans lequel le capteur de poudre (19) est disposé dans un applicateur de pulvérisation (3) relié à la conduite de poudre (9, 10).

**11.** Dispositif de mesure selon la revendication 10,
dans lequel le capteur de poudre (19) est conçu comme un capteur d'influence ou comme un capteur optique.

**12.** Dispositif de mesure selon l'une des revendications 1 à 11,
dans lequel l'unité de commande et d'évaluation (15) est conçue et utilisable de façon à calculer une valeur de pression lissée à partir de plusieurs des valeurs de pression (p) détectées par le capteur de pression (2).

**13.** Dispositif de convoyage de poudre de revêtement comprenant un dispositif de mesure selon l'une des revendications 1 à 12,

- équipé d'un convoyeur de poudre (1) fonctionnant avec du gaz comprimé (DRL), lequel est relié côté sortie à la conduite de poudre (9, 10), et
- dans lequel le dispositif de réglage (16) permet d'interrompre le flux de poudre de revêtement dans la conduite de poudre (9, 10).

**14.** Dispositif de convoyage selon la revendication 13, dans lequel la conduite de poudre (9, 10) est reliée côté sortie à un applicateur de pulvérisation (3).

**15.** Dispositif de convoyage selon la revendication 14, dans lequel la source de gaz comprimé (18) comprend un élément de blocage du gaz comprimé (11; 14).

**16.** Dispositif de convoyage selon l'une des revendications 13 à 15,
dans lequel la source de gaz comprimé (18) comprend un régulateur de débit (30; 31) qui est prévu pour maintenir le débit volumique de gaz comprimé ($\dot{V}$) amené au convoyeur de poudre (1) à une valeur constante pouvant être prédéfinie.

**17.** Dispositif de convoyage selon l'une des revendications 13 à 16,
dans lequel le convoyeur de poudre (1) comprend un injecteur (25) .

**18.** Dispositif de convoyage selon l'une des revendications 13 à 15,

- dans lequel le convoyeur de poudre (1) comprend un récipient de travail (51) avec une entrée de poudre (98) et une sortie de poudre (99.1), pouvant être mis sous pression, la sortie de poudre (99.1) étant reliée à l'élément de blocage (4), et
- dans lequel la conduite de poudre (9, 10) comporte côté entrée une entrée pour le gaz de transport (TL) .

19. Dispositif de convoyage selon l'une des revendications 13 à 18,
dans lequel l'unité de commande et d'évaluation (15) est conçue et utilisable de façon à régler la source de gaz comprimé (18) de telle sorte qu'un débit massique de poudre de revêtement ($\dot{m}$) défini s'établisse.

20. Procédé de mesure du débit massique de poudre de revêtement au moyen d'un dispositif de mesure selon la revendication 1, lequel comprend les étapes suivantes :

- l'unité de commande et d'évaluation (15) est mise en mode offset,
- la conduite de poudre (9, 10) est alimentée en gaz comprimé (DRL) au moyen du dispositif de réglage (16) et le flux de poudre de revêtement dans la conduite de poudre (9, 10) est interrompu,
- la pression dans la conduite de poudre (9, 10) est détectée au moyen du capteur de pression (2) et interprétée comme valeur de pression offset ($p_{off}$),
- l'unité de commande et d'évaluation (15) est mise en mode de fonctionnement,
- le flux de poudre de revêtement dans la conduite de poudre (9, 10) est libéré à l'aide du dispositif de réglage (16),
- la pression dans la conduite de poudre (9, 10) est détectée à l'aide du capteur de pression (2), et
- à l'aide de la pression détectée, de la valeur de pression offset ($p_{off}$) et de la valeur de correction (k), l'unité de commande et d'évaluation (15) détermine le débit massique de poudre de revêtement ($\dot{m}$) s'écoulant dans la conduite de poudre (9, 10).

Fig. 1

Fig. 2

Fig. 3

Fig. 4

Kalibriermodus — 501

Offset-Druckwert $p_{off}$ ermitteln — 502

Pulverfluss freigeben — 502.1

Druck $p_k$ und Masse m messen — 503

Pulverfluss unterbinden — 503.1

Korrekturwert k bestimmen $k = f(p_k, p_{off}, m, \Delta t)$ — 504

ja

Modus wechseln? — nein → Betriebsmodus — 505

Pulverfluss freigeben — 506

Druck p messen — 507

Massenstrom $\dot{m}$ ermitteln $\dot{m} = f(p, k)$ — 508

nein — Modus wechseln?

ja

Offset-Modus — 509

Offset-Druckwert $p_{off}$ ermitteln — 510

# Fig. 5

START
Offset-Druckwert $p_{off}$
ermitteln

Pulverfluss unterbinden — 601

Pulverleitung mit Druckluft
beaufschlagen — 602

Druck p messen — 603

Offset-Druckwert $p_{off}$ = p — 604

ENDE
Offset-Druckwert $p_{off}$
ermitteln

Fig. 6

Fig. 7

Fig. 8

Fig. 9

Fig. 10

33.2

33.1

33

**Fig. 11**

33.3

33

33.2

33.1

33.3

**Fig. 12**

A - A

33.2

33

33.1

9.2

33.3

PS

**Fig. 13**

A

33.2

33

33.3

A

**Fig. 14**

Fig. 15

Fig. 16

Fig. 17

Fig. 18

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017103316 A1
- DE 102018133713 A1
- WO 2009037540 A2
- DE 102005006522 B3
- EP 277821 A1
- WO 2003024612 A1
- DE 10247829 A1
- WO 2005051549 A1
- EP 3238832 A1
- DE 10300280 A1
- DE 10353968 A1
- WO 2014161718 A1
- WO 2014202342 A1
- US 6176647 B1